# EUROPÄISCHE PATENTSCHRIFT

(11) **EP 3 382 841 B1**
(45) Veröffentlichungstag und Bekanntmachung des Hinweises auf die Patenterteilung: **01.01.2020**
(21) Anmeldenummer: 18163915.4
(22) Anmeldetag: 26.03.2018
(51) Int. Cl.: H02J 3/14, H02J 3/32, H02J 3/38, H02J 3/46, H02J 7/34, H02J 7/00

(54) **HYBRIDE NUTZUNG VON ENERGIESPEICHERN**
HYBRID USE OF ENERGY STORAGE DEVICES
UTILISATION HYBRIDE D'ACCUMULATEURS D'ÉNERGIE

(30) Priorität: 27.03.2017 DE 102017106465
(43) Veröffentlichungstag der Anmeldung: 03.10.2018
(73) Patentinhaber: LichtBlick SE, 20359 Hamburg (DE)
(72) Erfinder: Dörschlag, Arne, 20359 Hamburg (DE)
(74) Vertreter: Eisenführ Speiser

(56) Entgegenhaltungen:
- WO-A1-2013/143327
- CN-A- 102 214 934
- US-A1- 2014 162 091
- US-A1- 2016 218 511

## Beschreibung

Die Erfindung betrifft ein Verfahren und ein System zum Erbringen von Regelleistung für ein elektrisches Energieversorgungsnetz mit einer Mehrzahl von Energieerzeugern, einer Mehrzahl von Energieabnehmern und einer zentralen Steuerungseinheit, welches gekennzeichnet ist durch das Bereitstellen eines Gesamtenergiespeichers, bestehend aus einer Mehrzahl von an das elektrische Energieversorgungsnetz koppelbaren Wirtschaftseinheiten mit jeweils mindestens einem Energiespeicher und jeweils mindestens einer dezentralen Steuerungseinheit.

Elektrische Energieversorgungsnetze regeln den Energietransfer von Energieerzeugern zu Energieverbrauchern. Um eine elektrische Energieversorgung bereitzustellen, muss das Übertragen von elektrischer Energie in Form von Stromflüssen oder Lastflüssen von Energieerzeugern zu Energieabnehmern systematisch geregelt sein. Überregionale Stromnetze werden von den Übertragungsnetzbetreibern verwaltet. An die Übertragungsnetzbetreiber angeschlossen sind die Verteilnetzbetreiber. Der Verteilnetzbetreiber verwaltet die Verteilung der Stromnetze zu den Endverbrauchern. Im Folgenden werden der Übertragungsnetzbetreiber und der Verteilnetzbetreiber allgemein als Netzbetreiber bezeichnet. Insbesondere im Zeitalter von erneuerbaren Energien ist man bestrebt, Strom mithilfe von beispielsweise Windkrafträdern, Wasserkraftwerken oder Solarzellen zu erzeugen. Andererseits ist eine Vielzahl von verschiedenen Energieabnehmern mit unterschiedlichstem Nutzerverhalten denkbar. Insbesondere müssen beispielsweise Privathaushalte oder Industrieanlagen als Energieabnehmer in Betracht gezogen werden.

Wetterbedingt kann die Stromerzeugung aus Wind- oder Sonnenenergie nur begrenzt vorhergesagt werden. Durch ein sich ständig änderndes Nutzerverhalten kann aber auch der Stromverbrauch nur begrenzt prognostiziert werden. Weiter können technische Störungen zu plötzlichen und ungeplanten Reduzierungen oder Erhöhungen des Stromverbrauchs oder der Stromerzeugung führen. Da somit sowohl Stromerzeugung als auch Stromverbrauch für zukünftige Zeitpunkte nur schwer prognostizierbar sind, spielen weiter Energiespeicher innerhalb eines elektrischen Energieversorgungsnetzes als Stromzwischenspeicher eine wichtige Rolle. Idealerweise wird Strom entsprechend der äußeren Umstände erzeugt, in Energiespeichern zwischengespeichert und bei Bedarf von den Energienutzern bezogen. Leider ist es jedoch nur schwer möglich, elektrische Ladungsträger beziehungsweise Energie über einen längeren Zeitraum zu speichern.

Politische und wirtschaftliche Maßnahmen folgen dem Ziel, die Umweltverträglichkeit, die Wirtschaftlichkeit und die Versorgungssicherheit von elektrischen Energieversorgungsnetzen zu verbessern. Für die Versorgungssicherheit mit elektrischer Energie ist die Frequenzhaltung des elektrischen Versorgungsnetzes ein wichtiger Aspekt. Sobald das Gleichgewicht zwischen Stromerzeugung und -verbrauch im Gesamtnetz gestört ist, kommt es zu Frequenzschwankungen. Diese Frequenzabweichungen dürfen aus Gründen der Netzstabilität einen festgelegten Wert nicht überschreiten.

Sollten diese Werte dennoch überschritten werden, greift der Netzbetreiber durch eine sofortige Regelung auf vorgehaltene Primärregelleistung zur Stabilisierung der Netzfrequenz zurück. Nach etwa 30 Sekunden wird zusätzlich vorgehaltene Sekundärregelleistung aktiviert, um die Frequenz wieder zu normalisieren. Primärregelleistung und Sekundärregelleistung unterscheiden sich somit insbesondere in ihrer Aktivierungsgeschwindigkeit. Soll nicht zwischen Primärregelleistung und Sekundärregelleistung unterschieden werden, wird Leistung zum Ausgleich von erhöhten Frequenzschwankungen oder Frequenzabweichungen als Regelleistung bezeichnet. Man unterscheidet zwischen Regelleistung in positive Richtung und Regelleistung in negative Richtung. Regelleistung in positive Richtung bedeutet, dass das Angebot an elektrischer Leistung durch erhöhte Einspeisung oder verringerte Nachfrage im Netz erhöht wird. Regelleistung in negative Richtung bedeutet, dass das Angebot an elektrischer Leistung durch verminderte Einspeisung oder erhöhte Nachfrage im Netz gesenkt wird.

Durch technische Entwicklungen in der Energiewirtschaft, eine regulatorische Öffnung der Märkte und durch die Verbesserung der Laststeuerung können sogar private Endkunden an der Dienstleistung Regelleistung beteiligt werden. Bei Engpässen in der Stromerzeugung, bei großem Bedarf an elektrischer Energie oder bei Störungen des Netzbetriebs können durch intelligente Steuerung des elektrischen Energieversorgungs-netzes Elektrizität verbrauchende Geräte durch Lastabwurf entsprechend abgeschaltet oder zugeschaltet werden. Analoges gilt für die entgegengesetzte Leistungsrichtung, das heißt für einen Überschuss an elektrischem Strom und bei einer verringerten Nachfrage.

Aus der US 2016/0218511 A1 geht ein Batteriespeicherwerk zur Glättung von Leistungsschwankungen hervor, das mehrere Batteriespeicherstationen umfasst, die ihrerseits jeweils aus mehrere Speichereinheiten bestehen. Das Batteriespeicherwerk weist ein zentrales Steuerungsmodul auf, das mit lokalen Steuerungsmodulen verbunden ist, die jeweils einer Batteriespeicherstation zugeordnet sind. Die zentrale Steuereinheit ermittelt in Echtzeit eine Gesamt-Leistungsanforderung für das Speicherwerk, aus der Leistungsbefehle für die Batteriespeicherstationen bestimmt werden. Hieraus werden dann von den lokalen Steuereinheiten Leistungsbefehle für die einzelnen Speichereinheiten ermittelt.

Die WO 2013/143327 A1 offenbart ein Verfahren zur Echtzeit-Leistungssteuerung einer Batteriespeicherstation. Bei dem Verfahren werden Daten der Batteriespeicherstation in Echtzeit ausgelesenen und zur Energiespeicherung und -verwaltung verwendet. Weiterhin wird ein Gesamtleistungssollwert für die Speicherstation bestimmt, es werden Sollwerte für in der Speicherstationen enthaltene Speichereinheiten ermittelt. Diese Werte werden zusammengefasst und an eine externe Überwachungsplattform übergeben.

Aus dem Stand der Technik, beispielsweise aus der EP 2010051177, ist ein Verfahren bekannt, bei dem eine Energieautomatisierungsanlage über eine erste Kommunikations-einrichtung mit jeweiligen Energieerzeugungseinrichtungen zugeordneten Steuereinheiten in Verbindung steht. Jede Energieerzeugungseinrichtung stellt mittels ihrer Steuereinheit eine Umweltbelastungskenngröße bereit, die eine momentane CO2-Abgabe pro Einheit elektrischer Energie der jeweiligen Energieerzeugungseinrichtung angibt. Zudem stellt jede Energieerzeugungseinrichtung mittels ihrer Steuereinheit eine Momentanleistungskenngröße bereit, die diejenige maximale elektrische Leistung angibt, die momentan von der Energieerzeugungseinrichtung bereitgestellt wird. Die Energieautomatisierungsanlage trifft in Abhängigkeit von der seitens der Energieverbraucher momentan 15 nachgefragten elektrischen Leistung unter Verwendung der jeweiligen Umweltbelastungskenngrößen und der jeweiligen Momentanleistungskenngrößen der einzelnen Energieerzeugungseinrichtungen eine Auswahl aus der Mehrzahl von Energieerzeugungseinrichtungen und verwendet die ausgewählten Energieversorgungseinrichtungen zur Deckung der momentanen Nachfrage nach elektrischer Leistung.

Nachteilig an diesem Verfahren ist jedoch, dass mit den Energiespeichern der Energieerzeugungseinrichtungen nicht an der Systemdienstleistung Erbringung von Regelleistung teilgenommen werden kann. Leistungen, die für Regelleistungen vorgehalten werden, müssen dem Netzbetreiber bereits für zukünftige Zeitpunkte mitgeteilt werden. Damit ist garantiert, dass dem Netzbetreiber für zukünftige Zeitpunkte bekannt ist, auf wie viel Leistung er für Regelleistung zurückgreifen können wird. Ob dann schließlich Regelleistung von einem Energiespeicher abgefragt wird, ist ebenfalls nicht garantiert, da dies nur bei Frequenzschwankungen notwendig ist. Technisch ist es jedoch nur schwer möglich, dass Energiespeicher immer passend auf akute Leistungsschwankungen reagieren. Energiespeicher, die hybrid genutzt werden, und für die das Vorhalten von Regelleistung nur die sekundäre Nutzungsform darstellt, dürfen weiter bei der Erbringung von Regelleistung ihre primäre Aufgabe nicht vernachlässigen. Weiter ist es nur schwer möglich für einzelne Energiespeicher eine Prognose über zukünftige nicht genutzte, und somit für Regelleistung vorhaltbare, Leistung zu erstellen.

Die Aufgabe der Erfindung besteht darin, Energiespeicher hybrid zu nutzen und dabei die Energiespeicher durch ihre sekundäre Nutzung, dem Vorhalten und Erbringen von Regelleistung, in ihrer primären Nutzungsform nicht oder nur minimal einzuschränken.

Die Aufgabe wird bei einem Verfahren der eingangs genannten Art gelöst durch:
- Bereitstellen eines Gesamtenergiespeichers, bestehend aus einer Mehrzahl von an das elektrische Energieversorgungsnetz koppelbaren Wirtschaftseinheiten mit jeweils mindestens einem Energiespeicher und jeweils mindestens einer dezentralen Steuerungseinheit;
- Bestimmen für jede der Wirtschaftseinheiten, mit einer Frequenz, durch die mindestens eine dezentrale Steuerungseinheit, einer individuellen Momentanleistung, und einer individuellen Maximalleistung des mindestens einen Energiespeichers;
- Bestimmen, durch die zentrale Steuerungseinheit, eines individuellen Leistungspotentials jeweils für jede der Wirtschaftseinheiten als die Differenz aus der individuellen Maximalleistung und der individuellen Momentanleistung;
- Zuweisen, für einen Zeitraum, durch die zentrale Steuerungseinheit, jeweils für jede der Wirtschaftseinheiten einer individuellen Leistung, wobei jeweils der Betrag der individuellen Leistung kleiner oder gleich dem Betrag des individuellen Leistungspotentials ist, und wobei die Summe der individuellen Leistungen und einer Leistungsreserve identisch ist mit einer ersten Gesamtleistung für Regelleistung;
- Vorhalten, durch jede der Wirtschaftseinheiten für den Zeitraum, der individuellen Leistung für Regelleistung.

Die von äußeren Umständen abhängige Stromerzeugung sowie das sich ständig ändernde Nutzerverhalten macht es erforderlich, Lastflüsse oder Stromflüsse in beliebiger Richtung schnell den Gegebenheiten anpassen und für zukünftige Ereignisse prognostizieren zu können. Der Erfindung liegt demzufolge die Motivation zugrunde, elektrische Energieversorgungsnetze besser zu stabilisieren und dass für diese Stabilisierung möglichst viele, auch privat genutzte Energiespeicher als sekundäre Aufgabe die Dienstleistung *Vorhalten und Erbringen von Regelleistung* leisten.

Vereinfacht dargestellt ist ein elektrisches Energieversorgungsnetz mit einer Vielzahl von Energieerzeugern, einer Vielzahl von Energiespeichern und einer Vielzahl von Energieabnehmern verbunden. Die Energieerzeuger erzeugen elektrischen Strom aus beispielsweise Solarenergie, Wasserkraft oder Windenergie, aber weitere, erneuerbare oder nicht erneuerbare, Energieformen sind denkbar. Als Energieabnehmer werden sämtliche Einheiten betrachtet, die selbst Energie benötigen. Hier sind beispielsweise private Haushalte, industrielle Fertigungsanlagen, Eisenbahnen, industrielle Kraftwerke, städtische Einrichtungen und vieles weitere als Energieabnehmer zu nennen. Energieerzeuger sind dadurch definiert, dass sie Strom in das elektrische Energieversorgungsnetz einspeisen. Energieabnehmer sind dadurch gekennzeichnet, dass sie elektrischen Strom aus dem elektrischen Energieversorgungsnetz beziehen.

Weiter ist das elektrische Energieversorgungsnetz mit einer Vielzahl von Energiespeichern verbunden. Die Verbindungen zwischen elektrischem Energieversorgungsnetz und Energiespeicher erlauben einen bidirektionalen Betrieb, das heißt, elektrische Leistung oder Strom kann sowohl von den Energiespeichern in das elektrische Energieversorgungsnetz abgegeben als auch von dem elektrischen Energieversorgungsnetz in den Energiespeicher aufgenommen werden. Hier sind auch unidirektionale Lastflüsse oder Stromflüsse möglich, das heißt elektrische Leistung oder Strom in nur eine Richtung, entweder nur von den Energiespeichern in das elektrische Energieversorgungsnetz, oder von dem elektrischen Energieversorgungsnetz in den Energiespeicher. Die oben genannten Beispiele für Energieerzeuger oder Energieabnehmer sind oft auch als Beispiele für Energiespeicher heranzuziehen. Weiter kommen hier Kondensatoren, Batteriespeicherkraftwerke, Pumpspeicherkraftwerke, Druckluftspeicherkraftwerke und vieles Weitere zum Einsatz.

Der Lastfluss oder Stromflüsse in oder aus dem elektrischen Energieversorgungsnetz wird durch den Netzbetreiber verwaltet. Der Netzbetreiber veranlasst bei Veränderung in der Stromerzeugung oder bei Veränderungen in der Stromabnahme weitere Energiespeicher, Energieerzeuger oder Energieabnehmer zur Hinzuschaltung oder Abschaltung, um die Netzstabilität zu garantieren.

Die Erfindung beschreibt ein Verfahren, um mit einem Gesamtenergiespeicher an der Aufgabe der Netzstabilisierung, bzw. Erbringung von Regelleistung mitzuwirken. Hierzu ist eine zentrale Steuerungseinheit sowohl mit dem Netzbetreiber als auch mit dem Gesamtenergiespeicher verbunden. In einer vorteilhaften Ausführungsform agiert ein Poolanbieter in der Verbindung zwischen dem Netzbetreiber und dem Gesamtenergiespeicher. Der Poolanbieter verfügt über technische Einheiten. Technische Einheiten umfassen Energieerzeuger, -abnehmer und/oder -speicher. Der Poolanbieter kontrahiert in seiner Rolle als Aggregator technische Einheiten Dritter und fasst diese zu einem virtuellen Kraftwerk mit geeigneten kommunikationstechnischen Mitteln zusammen. Ein virtuelles Kraftwerk wird auch als Pool bezeichnet. Er kann in der Rolle des Anlagenbetreibers dieser technischen Einheiten fungieren und besitzt eine direkte Steuerungsmöglichkeit der technischen Einheiten über die genannten kommunikationstechnischen Mittel. Die technischen Einheiten umfassen die Energiespeicher der Wirtschaftseinheiten. Es ist möglich, dass der Poolanbieter als Aggregator dritten Anlagenbetreibern über die genannte Kommunikationstechnik geeignete Signale zur Erbringung von Regelleistung weiterleitet und dessen Einheiten zu diesem Zweck indirekt steuert. Im Folgenden wird vereinfachend in allen genannten Fällen von Poolanbieter gesprochen. Weiter ist der Gesamtenergiespeicher mit dem elektrischen Energieversorgungsnetz unter anderem mittels Leitungen für elektrischen Strom verbunden. Der Netzbetreiber kommuniziert wechselseitig mit der zentralen Steuerungseinheit, wie viel Leistung aus dem Gesamtenergiespeicher für das Stabilisieren des elektrischen Energieversorgungsnetzes benötigt wird. Weiter kommuniziert die zentrale Steuerungseinheit mit dem Netzbetreiber, in welcher Höhe Leistung aus dem Gesamtenergiespeicher für die Stabilisierung des elektrischen Energieversorgungsnetzes für zukünftige Zeitpunkte bereitgestellt werden kann. Eine Leistung, die der Gesamtenergiespeicher zur Stabilisierung des elektrischen Energieversorgungsnetzes erbringt oder vorhält, wird im Folgenden als Regelleistung bezeichnet. Der Gesamtenergiespeicher soll sowohl Regelleistung in positive Richtung als auch Regelleistung in negative Richtung für zukünftige Zeitpunkte und Zeiträume als auch für einen Zeitpunkt und einen Zeitraum in der Gegenwart vorhalten oder erbringen können. Die zentrale Steuerungseinheit verwaltet weiter zumindest teilweise die elektrischen Leistungen oder die Stromflüsse in und aus dem Gesamtenergiespeicher. Die zentrale Steuerungseinheit verfügt über alle für das Ausführen der genannten Aufgaben nötigen Mittel.

Für jeweils einen der mindestens einen Energiespeicher einer Wirtschaftseinheit können durch die zentrale Steuerungseinheit oder durch die jeweils mindestens eine dezentrale Steuerungseinheit unter anderem der individuelle Füllstand, der individuelle Minimalfüllstand, der individuelle Maximalfüllstand, die individuelle Momentanleistung in positive und/oder negative Richtung, die individuelle Maximalleistung in positive und/oder negative Richtung und der Betriebsstatus bestimmt werden, Der Betriebsstatus kann unter anderem bestimmen, ob die jeweilige Wirtschaftseinheit am Vorhalten oder Erbringen von Regelleistung teilnimmt. Die Summe der individuellen Füllstände für alle Wirtschaftseinheiten wird als Gesamtfüllstand bezeichnet. Die Summe der individuellen Maximalfüllstände für alle Wirtschaftseinheiten wird als Maximalfüllstand bezeichnet. Die Summe der individuellen Minimalfüllstände für alle Wirtschaftseinheiten wird als Minimalfüllstand bezeichnet. Bei dem individuellen Füllstand, dem individuellen Maximalfüllstand und dem individuellen Minimalfüllstand handelt es sich um Speicherfüllstände. Speicherfüllstände sind ein Maß für eine Menge an verfügbarer elektrischer Energie. Der Begriff *Füllstand* ist im Folgenden eine Verallgemeinerung aller in dem erfindungsgemäßen Verfahren und System auftretenden Füllstände, das heißt, er umfasst den individuellen Füllstand, den individuellen Maximalfüllstand, den individuellen Minimalfüllstand, den Gesamtfüllstand, den Maximalfüllstand und den Minimalfüllstand.

Die Aggregation der individuellen Momentanleistungen für alle Wirtschaftseinheiten wird als Momentanleistung bezeichnet. Die Aggregation der individuellen Maximalleistungen für alle Wirtschaftseinheiten wird als Maximalleistung bezeichnet. Bei Leistungen und Regelleistungen handelt es sich um elektrische Leistungen. Der Begriff *Leistung* umfasst im Folgenden in dem erfindungsgemäßen Verfahren und System die individuelle Momentanleistung, die individuelle Maximalleistung, das individuelle Leistungspotential, die individuelle Leistung, die Leistungsreserve, die individuelle Leistungsreserve, die erste Gesamtleistung, die zweite Gesamtleistung und die angepasste individuelle Leistung. Leistungen und Regelleistungen haben ein positives Vorzeichen, wenn es sich um bilanzielle Erhöhung des elektrischen Leistungsangebotes im Netz handelt, das heißt, wenn sie beispielsweise eine Leistungsabgabe aus dem Energiespeicher in das elektrische Energieversorgungsnetz beschreiben. Leistungen und Regelleistungen haben ein negatives Vorzeichen, wenn es sich um bilanzielle Verringerung des elektrischen Leistungsangebotes im Netz handelt, das heißt, wenn sie beispielsweise eine Leistungsaufnahme aus dem elektrische Energieversorgungsnetz in den Energiespeicher beschreiben. Entscheidend ist dabei nicht die physikalisch gemessene Leistungsrichtung am Netzanschlusspunkt der Wirtschaftseinheit oder am Zählpunkt des Speichers, sondern die Richtung der Abweichung vom geplanten Arbeitspunkt (individuelle Momentanleistung) des Speichers. So kann trotz der tatsächlichen Erbringung von positiver Regelleistung physikalisch der Speicherfüllstand zunehmen oder anders herum bei der tatsächlichen Erbringung von negativer Regelleistung eine Einspeisung am Hausanschlusspunkt (bspw. durch hohe PV-Produktion in der Wirtschaftseinheit) gemessen werden.

Je größer der Maximalfüllstand des Gesamtenergiespeichers ist und je mehr Maximalleistung in dem Gesamtenergiespeicher vorhanden ist, desto größer ist die mögliche Regelleistung, die durch den Gesamtenergiespeicher vorgehalten und erbracht werden kann.

Der Unterschied zwischen Momentanleistung und Maximalleistung kann idealerweise für Regelleistung vorgehalten und erbracht werden. Dies ist jedoch nur so lange möglich, bis entweder für Regelleistung in negative Richtung der Gesamtfüllstand den Maximalfüllstand erreicht hat, oder für Regelleistung in positive Richtung der Gesamtfüllstand den Minimalfüllstandfüllstand erreicht hat.

Ein hoher Maximalfüllstand des Gesamtenergiespeichers wird dadurch erreicht, dass eine Vielzahl von Wirtschaftseinheiten zusammengenommen den Gesamtenergiespeicher definiert. Je größer die Anzahl der Wirtschaftseinheiten, desto größer ist der mögliche Maximalfüllstand und die mögliche Maximalleistung des Gesamtenergiespeichers. Die Anzahl der Wirtschaftseinheiten kann stark erhöht werden, wenn nicht nur industrielle Einheiten, sondern auch Privathaushalte als erfindungsgemäße Wirtschaftseinheiten betrachtet werden. Als eine Wirtschaftseinheit kommt somit ein Privathaushalt mit beispielsweise Mitteln zum Erzeugen von Photovoltaikstrom in Betracht. Ein Privathaushalt mit anderen Mitteln zum Erzeugen von Strom kann auch als Wirtschaftseinheit in Betracht gezogen werden. Dieser beispielsweise Photovoltaikstrom wird lokal in dem Privathaushalt gespeichert beziehungsweise von dem Privathaushalt genutzt. Diese singuläre Nutzungsform ist unwirtschaftlich, bzw. lastet den Speicher über die Gesamtlebensdauer gesehen nicht optimal im wirtschaftlichen Sinne aus. Somit drängt sich eine hybride Nutzung auf. Im Falle der beispielsweise zur Photovoltaikstromzwischenspeicherung verwendeten Batterien würde durch den fluktuierenden Charakter der Solarstromproduktion zu dessen Produktionszeiten wenig Leistung für Regelleistung zur Verfügung stehen, in anderen Zeiten (zum Beispiel nachts) jedoch unter Umständen die gesamte verfügbare Leistung.

Für das erfindungsgemäße Verfahren verfügt jede Wirtschaftseinheit über eine dezentrale Steuerungseinheit, die mit dem Energiespeicher der jeweiligen Wirtschaftseinheit sowie mit der zentralen Steuerungseinheit verbunden oder gekoppelt werden kann. Die dezentrale Steuerungseinheit einer Wirtschaftseinheit regelt den Energiehaushalt des jeweiligen Energiespeichers, das heißt, dass sie unter anderem Leistungen und Kapazitäten steuert, misst und verwaltet und diese Leistungen und Kapazitäten mit der zentralen Steuerungseinheit kommuniziert. Weiter sind auch Wirtschaftseinheiten denkbar, die über eine Mehrzahl an Energiespeicher verfügen, solange die Mehrzahl an Energiespeichern mit der dezentralen Steuerungseinheit der Wirtschaftseinheit in der genannten Weise verbunden sind oder gekoppelt werden können.

Die zentrale Steuerungseinheit steuert den Energiehaushalt des Gesamtenergiespeichers, das heißt den oben beschriebenen Energiehaushalt für die Energiespeicher aller Wirtschaftseinheiten. Diese Zusammenfassung der individuellen Speicher aller Wirtschaftseinheiten zu einem Gesamtenergiespeicher, die zentrale Verwaltung des Gesamtenergiespeichers durch die zentrale Steuerungseinheit und die dezentrale Verwaltung der Energiespeicher der Wirtschaftseinheiten durch die zentrale Steuerungseinheit hat zur Folge, dass die Leistung zwischen dem elektrischen Energieversorgungsnetz und dem Gesamtenergiespeicher situationsbedingt auf die einzelnen Energiespeicher der Wirtschaftseinheiten aufgeteilt werden kann. Die Energiespeicher der Wirtschaftseinheiten sind somit mit dem elektrischen Energieversorgungsnetz verbunden oder können gekoppelt werden. Es sind hierfür unidirektionale oder bidirektionale Kopplungen möglich.

Die zentrale Steuerungseinheit hat die Aufgabe, dass es bei Erbringung von Regelleistung durch den Gesamtenergiespeicher zu möglichst keiner Einschränkung des primären Nutzens, beispielsweise der Photovoltaikstromzwischenspeicherung, der Energiespeicher der Wirtschaftseinheiten kommt. Im Rahmen des erfindungsgemäßen Verfahrens und des erfindungsgemäßen Systems wird als Wirtschaftseinheit eine Einheit gesehen, die mindestens einen Energiespeicher und eine dezentrale Steuerungseinheit umfasst, wobei der Energiespeicher mit der dezentralen Steuerungseinheit verbunden ist oder gekoppelt werden kann, die dezentrale Steuerungseinheit mit der zentralen Steuerungseinheit verbunden ist oder gekoppelt werden kann und der Energiespeicher mit dem elektrischen Energieversorgungsnetz verbunden ist oder gekoppelt werden kann.

Weiter können die Energiespeicher der Wirtschaftseinheiten mit einer Mehrzahl von externen Energieerzeugern und mit einer Mehrzahl von externen Energieverbrauchern verbunden sein. Für Privathaushalte kommen hier beispielsweise Solarzellen als externe Energieerzeuger in Betracht. Weiter kommen als externe Energieverbraucher elektrische Einrichtungen oder Geräte des Privathaushaltes in Betracht.

Die Wirtschaftseinheiten können entweder Energieerzeuger, Energieabnehmer, Energiespeicher oder mehreres gleichzeitig sein. Die Wirtschaftseinheiten zeichnen sich jedoch durch die zusätzliche Eigenschaft aus, dass die elektrische Leistung oder der Stromfluss aus den oder in die Wirtschaftseinheiten zumindest teilweise von der zentralen Steuerungseinheit und der dezentralen Steuerungseinheit überwacht, das heißt, gemessen, gesteuert und verändert werden kann.

Im Folgenden wird das erfindungsgemäße Verfahren und System für einen Energiespeicher in einer Wirtschaftseinheit beschrieben. Der Fachmann kann es leicht auf eine Mehrzahl von Energiespeichern in einer Wirtschaftseinheit verallgemeinern. Mit einer Frequenz, zum Beispiel alle fünf Minuten, das heißt mit einer festen Frequenz, werden wiederholt durch die dezentrale Steuerungseinheit die individuelle Momentanleistung in positive und/oder negative Richtung und die individuelle Maximalleistung in positive und/oder negative Richtung des jeweiligen Energiespeichers erfasst. Das Vorzeichen von Leistung ist positiv oder negativ, das heißt, es handelt sich um Leistung in positive oder negative Richtung, je nachdem ob es sich Entlade- oder Ladeleistung handelt.

Weiter erfasst die dezentrale Steuerungseinheit den individuellen Füllstand, den individuellen Maximalfüllstand und den individuellen Minimalfüllstand des Energiespeichers. Dieses Bestimmen wird für alle der Wirtschaftseinheiten jeweils von der dezentralen Steuerungseinheit getätigt. Jede dezentrale Steuerungseinheit teilt die gemessenen Werte der zentralen Steuerungseinheit mit, vorteilhaft mit der festen Frequenz oder häufiger. Die zentrale Steuerungseinheit erhält somit einen Überblick über die individuellen Momentanleistungen, die individuellen Maximalleistungen, die individuellen Füllstände und die individuellen Maximalfüllstände der Wirtschaftseinheiten des Gesamtenergiespeichers. Leistungen und Füllstände können von der zentralen Steuerungseinheit aggregiert und summiert werden und in ihrer Gesamtheit dem Erbringen und Vorhalten von Regelleistung zur Verfügung stehen. Alle Erfassungs- und Mitteilungsvorgänge finden mit der festen Frequenz oder häufiger statt.

Für jede Wirtschaftseinheit bestimmt die zentrale Steuerungseinheit das individuelle Leistungspotential in positive und/oder negative Richtung. Die Anzahl der Wirtschaftseinheiten ist identisch mit der Anzahl der individuellen Leistungspotentiale in positive und/oder negative Richtung. Die individuellen Leistungspotentiale paarweise verschiedener Wirtschaftseinheiten sind unterschiedlich oder können identisch sein. Das individuelle Leistungspotential gibt somit einen Höchstwert an, mit dem die jeweilige Wirtschaftseinheit als sekundäre Aufgabe zur primären Aufgabe, zum Beispiel der Photovoltaikstromzwischenspeicherung, zu dem jetzigen Zeitpunkt Leistung für Regelleistung je Leistungsrichtung positiv oder negativ vorhalten oder erbringen kann.

Nachdem Leistungen für Regelleistung in jeweils positive und/oder negative Richtung von der zentralen Steuerungseinheit festgelegt wurden, können diese Leistungen den Wirtschaftseinheiten zugewiesen werden. Entsprechend der aktuell gemessenen Werte für Leistung und Füllstände und den in der Vergangenheit für den jetzigen Zeitpunkt vorgegebenen Wert für Regelleistung weist die zentrale Steuerungseinheit jeder Wirtschaftseinheit eine individuelle Leistung zu, die die Wirtschaftseinheit zu dem jetzigen Zeitpunkt für Regelleistung vorhalten und im Abruffall erbringen soll. Die individuelle Leistung ist jeweils die Leistung die jeweils von einer Wirtschaftseinheit für Regelleistung vorzuhalten ist. Die individuelle Leistung ist jeweils eine Leistung in positive und/oder negative Richtung. Vorhalten von Leistung bedeutet, dass der Wert dieser Leistung nicht für den primären Nutzen zur Verfügung steht und im Bedarfsfall - auf Anfrage durch beispielsweise den Poolanbieter, die zentrale Steuerungseinheit oder die dezentrale Steuerungseinheit - für Regelleistung erbracht werden kann. Das Vorhalten ist eine Warteposition. Erbringung von Leistung ergibt sich nur, wenn eine Vorhaltung von Leistung existiert. Weiter weist die zentrale Steuerungseinheit jeder Wirtschaftseinheit einen Zeitraum, zum Beispiel - und entsprechend der Frequenz - ebenfalls fünf Minuten, zu. Für diesen Zeitraum soll die jeweilige Wirtschaftseinheit die ihr mitgeteilte individuelle Leistung für Regelleistung vorhalten. Der Zeitraum ist definiert als die Zeit zwischen einem ersten und einem zweiten Zeitpunkt. Der erste Zeitpunkt stellt einen Startzeitpunkt dar. Der zweite Zeitpunkt stellt einen Endzeitpunkt dar. Die Zuweisung durch die zentrale Steuerungseinheit von der individuellen Leistung und dem Zeitraum für die Wirtschaftseinheiten erfolgt so, dass die Summe der individuellen Leistungen mit dem in der Vergangenheit für den jetzigen Zeitpunkt oder Zeitraum vorgegebenen Wert für Regelleistung identisch ist. Ist dies nicht möglich, bedient sich die zentrale Steuerungseinheit einer Leistungsreserve und/oder individuellen Leistungsreserven jeweils der Energiespeicher und/oder einer externen Leistung und/oder schränkt zeitweilig die primäre Nutzungsform für eine, für mehrere oder für alle Wirtschaftseinheiten temporär und teilweise ein. Die Leistungsreserve, die individuellen Leistungsreserven jeweils der Energiespeicher, die externen Leistung und das zeitweilig Einschränken der primäre Nutzungsform kann in positive und/oder negative Richtung erfolgen, das heißt vorgehalten und/oder erbracht werden. Die Leistungsreserve ist so gewählt, dass die Summe der individuellen Leistungen und der Leistungsreserve mit dem in der Vergangenheit für den jetzigen Zeitpunkt oder Zeitraum vorgegebenen Wert für Regelleistung identisch ist. Damit die individuelle Leistung durch die Wirtschaftseinheit erbracht werden kann, muss die zugewiesene individuelle Leistung kleiner als oder gleich dem individuellen Leistungspotential einer Wirtschaftseinheit sein. Mit der Zuweisung der individuellen Leistung an jede der Wirtschaftseinheiten gilt diese für den Zeitraum reserviert. Es wird jeweils die individuelle Momentanleistung für den gültigen Zeitraum so beschränkt, dass jeweils die Summe aus dem Betrag der individuellen Leistung und dem Betrag der individuellen Momentanleistung während des Zeitraumes in positive und/oder negative Richtung den Betrag der Maximalleistung in die entsprechende Richtung nicht überschreitet. Bei dem frequenzgemäßen Bestimmen der individuellen Momentanleistung wird beispielsweise die für die Erstnutzung erforderliche individuelle Momentanleistung zum Zeitpunkt des Bestimmens bestimmt.

Kommt es während des Zeitraums zu geänderten Leistungsanforderungen durch die Erstnutzung der Wirtschaftseinheit, kommt es unter Umständen zu einer Einschränkung der Erstnutzung der Wirtschaftseinheit. Je kleiner der Zeitraum gewählt wird oder je größer die Frequenz gewählt wird, desto weniger Verdrängung vom Strom für die Erstnutzung findet statt. Es kann davon ausgegangen werden, dass sich die zur vollen Erfüllung des Erstnutzens erforderliche Leistung innerhalb kurzer Zeit nur geringfügig ändern wird. Die sich ständig ändernden Leistungen einer Wirtschaftseinheit werden mit einer festen Frequenz bestimmt. Für die Zuweisung durch die zentrale Steuerungseinheit von der individuellen Leistung und dem Zeitraum oder dem Zeitpunkt an die Wirtschaftseinheit wird die individuelle Leistung zwischen den Zeitpunkten als konstant festgelegt. Vorzugsweise beträgt dieser konstante Wert für den Zeitraum den Wert der Differenz aus der individuellen Maximalleistung und der individuellen Momentanleistung zu dem Zeitpunkt, der der Startzeitpunkt des Zeitraums ist, oder zu einem früheren Zeitpunkt. Die Funktion der individuellen Momentanleistung in Abhängigkeit von der Zeit wird durch eine stückweise konstante, nicht stetige Funktion approximiert, die die individuelle Leistung in Abhängigkeit von der Zeit beschreibt.

Die Zuweisung von der individuellen Leistung und dem Zeitraum kann beispielsweise gestaffelt erfolgen. Beispielsweise kann beginnend mit der Wirtschaftseinheit mit dem größten individuellen Leistungspotential die größte individuelle Leistung zugewiesen werden. Dies wäre batterietechnisch interessant, da der Wirkungsgrad mit zunehmender individueller Leistung zunimmt. Eine alternative Möglichkeit wäre eine gleichmäßige Zuweisung der individuellen Leistungen auf die Wirtschaftseinheiten, das heißt, dass die individuelle Leistung identisch für alle Wirtschaftseinheiten festgelegt und identisch allen Wirtschaftseinheiten zugewiesen wird. Hiermit wäre eine möglichst gleichmäßige Erbringung gesichert. So würden Batterien mit geringem Erstnutzen nicht übermäßig belastet. Je nach Vergütungsform für den Zweitnutzen würde mit diesem Verfahren eine möglichst gleichmäßige Verteilung der Erlöse unter den Kunden erfolgen. Die genannten Restriktionen für die individuellen Leistungen gelten weiterhin. Auch andere Arten der Zuweisung oder der Festlegung sind möglich.

Für das erfindungsgemäße Verfahren und System wird ein Zeitraum durch zwei Zeitpunkte, einem ersten Zeitpunkt und einem zweiten Zeitpunkt, definiert. Ein Zeitraum ist die Zeit, die von dem ersten Zeitpunkt bis zu dem zweiten Zeitpunkt vergeht. Es ist möglich, dass für jede Wirtschaftseinheit individuelle Zeitpunkte oder ein individueller Zeitraum bestimmt werden. Aus allen individuellen Zeitpunkten wird der Zeitpunkt bestimmt. Dies geschieht beispielsweise dadurch, dass das Minimum der individuellen Zeitpunkte den Zeitpunkt definiert. Aus allen individuellen Zeiträumen wird der Zeitraum bestimmt. Dies geschieht beispielsweise dadurch, dass das Minimum von den individuellen Zeiträumen den Zeitraum definiert. Hier sind viele weitere Möglichkeiten denkbar.

Während jede der Wirtschaftseinheiten für den Zeitraum die individuelle Leistung für Regelleistung vorhält oder erbringt, finden die oben beschriebenen Schritte des Bestimmens durch die dezentrale Steuerungseinheit und durch die zentrale Steuerungseinheit und die Zuweisung durch die zentrale Steuerungseinheit erneut statt. So werden die individuelle Leistung für Regelleistung, die Zeitpunkte und der Zeitraum für die Zukunft bestimmt.

Über bestimmte Nachladestrategien am Intraday-Markt werden die Energiespeicher möglichst in einem arbeitsfähigen Zustand gehalten. Eine Entladung in das elektrische Energieversorgungsnetz über den Handel wird aus wirtschaftlichen Gründen vermieden, ist aber grundsätzlich denkbar.

Gemäß einer vorteilhaften Ausführungsform des erfindungsgemäßen Verfahrens ist weiter vorgesehen, dass jede der Wirtschaftseinheiten für den Zeitraum jeweils die individuelle Leistung erbringen kann. Je nach Bedarf kann, nach Mitteilung durch den Poolanbieter an den Netzbetreiber, die zentrale Steuerungseinheit oder jeweils die dezentrale Steuerungseinheit, jeweils die individuelle Leistung, die jeweils vorgehalten wird, jeweils von den Wirtschaftseinheiten für Regelleistung in positive und/oder negative Richtung erbracht werden.

Gemäß einer vorteilhaften Ausführungsform des erfindungsgemäßen Verfahrens ist weiter vorgesehen, dass jede der Wirtschaftseinheiten für den Zeitraum jeweils zusätzlich zu der individuellen Leistung eine individuelle Leistungsreserve in positive und/oder negative Richtung für Regelleistung erbringen kann oder auf eine individuelle Leistungsreserve in positive und/oder negative Richtung für Regelleistung zurückgreifen kann, wobei für jede der Wirtschaftseinheiten jeweils die Summe der individuellen Leistung und der individuellen Leistungsreserve, die eine angepasste individuelle Leistung ergibt.

Die angepasste individuelle Leistung ist kleiner oder gleich als das zuvor ermittelte individuelle Leistungspotenzial. Vorzugsweise soll jede Wirtschaftseinheit für den Zeitraum nicht die individuelle Leistung, sondern die angepasste individuelle Leistung reservieren, das heißt, nicht für den Primärnutzen zur Verfügung stellen. Die Anzahl der Wirtschaftseinheiten ist identisch mit der Anzahl der individuellen Leistungsreserven für Regelleistung in positive und/oder negative Richtung. Die individuellen Leistungsreserven paarweise verschiedener Wirtschaftseinheiten sind unterschiedlich oder können identisch sein.

Wie bereits oben beschrieben, kann der Fall eintreten, dass die Summe der individuellen Leistungen nicht übereinstimmt mit der Vorgabe der ersten Gesamtleistung für Regelleistung, beispielsweise durch den Ausfall einer Wirtschaftseinheit. In diesem Fall bedient sich die zentrale Steuerungseinheit zusätzlich der individuellen Leistungsreserven. Die zentrale Steuerungseinheit versucht, die individuellen Leistungen jeweils so hoch wie möglich zu wählen. Dadurch ergibt sich, dass die individuellen Leistungsreserven so gering wie möglich sind. Die individuelle Leistungsreserve ist jeweils das nicht genutzte Leistungspotenzial.

Weiter kann eine externe Leistung beispielsweise von einer externen Einheit als zusätzliche Leistungsreserve vorgehalten werden, für den Fall, dass die Summer der individuellen Leistungsreserven für den beschriebenen Fall zur Erbringung der ersten Gesamtleistung für Regelleitung nicht ausreichen. Es soll vermieden werden, dass von dem Poolanbieter angebotene Regelleistung nicht erbracht werden kann.

Während jede der Wirtschaftseinheiten für den Zeitraum die angepasste individuelle Leistung für Regelleistung vorhält oder erbringt, finden die oben beschriebenen Schritte des Bestimmens und des Festlegens durch die dezentrale Steuerungseinheit und durch die zentrale Steuerungseinheit und die Zuweisung durch die zentrale Steuerungseinheit erneut statt. So werden die angepasste individuelle Leistung für Regelleistung, die Zeitpunkte und der Zeitraum für die Zukunft bestimmt.

Eine weitere vorteilhafte Ausführungsform des erfindungsgemäßen Verfahrens sieht in diesem Zusammenhang vor, dass in dem Fall, dass die Summe der individuellen Leistungsreserven nicht gleich der Leistungsreserve ist, eine externe Einheit eine externe Leistung erbringt, wobei die Summe der individuellen Leistungsreserven und der externen Leistung gleich der Leistungsreserve ist. Vorzugsweise kann sich die zentrale Steuerungseinheit zusätzlich einer externen Leistung bedienen. Dieses zusätzliche Bedienen sollte vermieden werden und soll nur dann angewendet werden, wenn der Gesamtenergiespeicher nicht in der Lage ist, die vorgegebene Regelleistung zu erbringen.

Eine weitere vorteilhafte Ausführungsform des erfindungsgemäßen Verfahrens sieht in diesem Zusammenhang vor, dass der Zeitraum das Reziproke der Frequenz ist.

Die Frequenz wird in Hertz (Hz) gemessen. 1 Hz bedeutet, dass das oben beschriebene Verfahren einmal pro Sekunde durchgeführt wird. In der Realität wird beispielsweise ein Zeitraum von fünf Minuten, das heißt 300 Sekunden, angesetzt. Daraus ergibt sich eine Frequenz von 1/300 Hertz. Das bedeutet, dass das oben beschriebene Verfahren alle 300 Sekunden durchgeführt wird. Weitere Zeiträume und Frequenzen sind hier möglich.

Eine vorteilhafte Ausführungsform des erfindungsgemäßen Verfahrens sieht vor, dass die individuelle Leistung jeweils für jede der Wirtschaftseinheiten gleich null gesetzt wird, wenn der Quotient aus der individuellen Momentanleistung und der individuellen Maximalleistung größer ist als ein erster individueller Richtwert oder kleiner ist als ein zweiter individueller Richtwert.

Vorzugsweise nehmen der erste und der zweite Richtwert reelle Werte aus dem Intervall [-1;+1], das heißt Zahlen zwischen -1 und +1 an. Der erste und der zweite Richtwert können individuell für jede Wirtschaftseinheit festgelegt werden. Alternativ können der ersten und der zweite Richtwert für alle Wirtschaftseinheiten identisch festgelegt werden.

Die zentrale Steuerungseinheit kann die individuelle Leistung je Leistungsrichtung gleich 0 setzen. Dies ist beispielsweise für die Wirtschaftseinheit der Fall, für die sich die individuelle Momentanleistung prozentual bezogen auf die individuelle Maximalleistung nicht innerhalb eines vorgegebenen Intervalls befindet, das nach unten durch den ersten individuellen Richtwert und nach oben durch den zweiten individuellen Richtwert definiert ist. Die Wirtschaftseinheit, für die die individuelle Momentanleistung je Leistungsrichtung nicht innerhalb dieses Intervalls liegt, nimmt für diesen Zeitraum nicht an der Vorhaltung oder Erbringung von Regelleistung in positive und/oder negative Richtung teil. Somit wird vermieden, dass Wirtschaftseinheiten an der Vorhaltung oder Erbringung von Regelleistung in die entsprechende Leistungsrichtung teilnehmen, wenn sich ihre individuelle Momentanleistung entsprechend stark oder entsprechend wenig von der individuellen Maximalleistung unterscheidet.

Der erste und der zweite individuelle Richtwert können entweder von extern der Wirtschaftseinheit übermittelt werden, beispielsweise durch den Eigentümer des Privathaushaltes, oder durch die zentrale Steuerungseinheit bestimmt sein. Von der zentralen Steuerungseinheit bestimmte Vorgaben für den ersten individuellen Richtwert oder den zweiten individuellen Richtwert basieren auf in der Vergangenheit ermittelten Erfahrungswerten für das Erbringen oder das Vorhalten von individueller Leistung für Regelleistung je Leistungsrichtung durch die Wirtschaftseinheit.

In einer bevorzugten Ausführungsform kann festgelegt werden, durch die zentrale Steuerungseinheit, die dezentrale Steuerungseinheit einer Wirtschaftseinheit oder durch ein Eingabegerät in einer Wirtschaftseinheit, dass für Wirtschaftseinheiten, für die die individuelle Leistung je Leistungsrichtung null beträgt oder gleich null gesetzt wurde, die individuelle Leistungsreserve und die angepasste individuelle Leistung gleich null beträgt.

Eine vorteilhafte Ausführungsform des erfindungsgemäßen Verfahrens sieht außerdem vor, dass die erste Gesamtleistung für Regelleistung auf eine zweite Gesamtleistung für Regelleistung betragsmäßig erhöht wird.

Die betragsmäßige Erhöhung der ersten Gesamtleistung für Regelleistung auf eine zweite Gesamtleistung für Regelleistung findet vorzugsweise statt, wenn die Summe der individuellen Leistungen im Betrag oder die Summe der individuellen Leistungspotenziale im Betrag größer ist als die erste Gesamtleistung für Regelleistung im Betrag. Die zweite Gesamtleistung für Regelleistung ist eine Regelleistung in positive und/oder negative Richtung, die für die Zukunft vorgehalten oder/und erbracht werden kann.

Wenn die zentrale Steuerungseinheit oder die jeweilige dezentrale Steuerungseinheit in der Gegenwart feststellt, dass der Betrag der Summe der individuellen Leistungen im Betrag in positive oder negative Richtung oder der Summe der individuellen Leistungspotenziale in positive und/oder negative Richtung größer ist als der Betrag der Vorgabe für das Vorhalten der ersten Gesamtleistung für Regelleistung in positive und/oder negative Richtung für die Gegenwart, kann die zentrale Steuerungseinheit oder die jeweilige dezentrale Steuerungseinheit die erste Gesamtleistung für Regelleistung betragsmäßig auf eine zweite Gesamtleistung für Regelleistung für das Vorhalten und/oder Erbringen in der Zukunft erhöhen, sodass die genannten Beträge für zukünftige Zeitpunkte oder Zeiträume übereinstimmen.

In einer vorteilhaften Ausführungsform ist es möglich, dass die Richtung der Leistungserbringung geändert wird. Eine Änderung der Richtung der Leistung umfasst eine Änderung der Richtung des Stromflusses oder eine Arbeitspunktverschiebung der Leistungserbringung. Das heißt, dass entweder die ersten Gesamtleistung für Regelleistung eine Leistung in positive Richtung und die zweite Gesamtleistung für Regelleistung eine Leistung in negative Richtung ist oder, dass die ersten Gesamtleistung für Regelleistung eine Leistung in negative Richtung und die zweite Gesamtleistung für Regelleistung eine Leistung in positive Richtung ist.

In einer weiteren vorteilhaften Ausführungsform ist es möglich, dass die Richtung der Leistungserbringung nicht geändert wird.

Die betragsmäßige Erhöhung der ersten Gesamtleistung für Regelleistung auf eine zweite Gesamtleistung für Regelleistung findet weiter vorzugsweise statt, wenn Erfahrungswerte für die Gegenwart zeigen, dass im zweiten Zeitraum weniger Leistung und Kapazität der Wirtschaftseinheiten für den primären Einsatzzweck benötigt werden wird und somit mehr Leistung und Kapazität der Wirtschaftseinheiten für einen sekundären Einsatzzweck zur Verfügung stehen.

Eine vorteilhafte Ausführungsform des erfindungsgemäßen Verfahrens sieht außerdem vor, dass die erste Gesamtleistung für Regelleistung auf eine zweite Gesamtleistung für Regelleistung betragsmäßig verringert wird.

Die betragsmäßige Verringerung der ersten Gesamtleistung für Regelleistung auf eine zweite Gesamtleistung für Regelleistung findet vorzugsweise statt, wenn die Summe der individuellen Leistungen im Betrag oder die Summe der individuellen Leistungspotenziale im Betrag kleiner ist als die erste Gesamtleistung für Regelleistung im Betrag. Die zweite Gesamtleistung für Regelleistung ist eine Regelleistung in positive und/oder negative Richtung, die für die Zukunft vorgehalten und/oder erbracht werden kann.

Wenn die zentrale Steuerungseinheit oder die jeweilige dezentrale Steuerungseinheit in der Gegenwart feststellt, dass der Betrag der Summe der individuellen Leistungen im Betrag in positive oder negative Richtung oder der Summe der individuellen Leistungspotenziale in positive und/oder negative Richtung kleiner ist als der Betrag der Vorgabe für das Vorhalten der ersten Gesamtleistung für Regelleistung in positive und/oder negative Richtung für die Gegenwart, kann die zentrale Steuerungseinheit oder die jeweilige dezentrale Steuerungseinheit die erste Gesamtleistung für Regelleistung betragsmäßig auf eine zweite Gesamtleistung für Regelleistung für das Vorhalten und/oder Erbringen in der Zukunft verringern, sodass die genannten Beträge für zukünftige Zeitpunkte oder Zeiträume übereinstimmen.

Analog, wie beschrieben, ist es möglich, dass entweder die Richtung geändert wird oder, dass die Richtung nicht geändert wird.

Die betragsmäßige Verringerung der ersten Gesamtleistung für Regelleistung auf eine zweite Gesamtleistung für Regelleistung findet weiter vorzugsweise statt, wenn Erfahrungswerte für die Gegenwart zeigen, dass im zweiten Zeitraum mehr Leistung und Kapazität der Wirtschaftseinheiten für den primären Einsatzzweck benötigt werden wird und somit weniger Leistung und Kapazität der Wirtschaftseinheiten für einen sekundären Einsatzzweck zur Verfügung stehen.

Die zweite Gesamtleistung für Regelleistung kann eine Leistung für Regelleistung in positive und/oder negative Richtung sein. Ob die zweite Gesamtleistung für Regelleistung eine Leistung für Regelleistung in positive und/oder negative Richtung ist, ist unabhängig davon ob die erste Gesamtleistung für Regelleistung eine Leistung für Regelleistung in positive und/oder negative Richtung ist.

In einer weiteren vorteilhaften Ausführungsform des erfindungsgemäßen Verfahrens kann für jede der Wirtschaftseinheiten jeweils ein individueller Maximalfüllstand festgelegt werden, wobei jeweils in dem Fall, dass der individuelle Maximalfüllstand nicht festgelegt ist, die dezentrale Steuerungseinheit den individuellen Maximalfüllstand bestimmt.. Über ein Eingabegerät, das mit der dezentralen Steuerungseinheit verbunden ist oder gekoppelt werden kann, kann beispielsweise der individuelle Maximalfüllstand des Energiespeichers festgelegt werden.

Die Anzahl der Wirtschaftseinheiten ist identisch mit der Anzahl der individuellen Maximalfüllstände. Die individuellen Maximalfüllstände paarweise verschiedener Wirtschaftseinheiten sind unterschiedlich oder können identisch sein. Wird eine Eingabe für den individuellen Maximalfüllstand nicht vorgenommen, wird der individuelle Maximalfüllstand von der zentralen Steuerungseinheit oder jeweils den dezentralen Steuerungseinheiten bestimmt. Die Möglichkeit der Eingabe eines individuellen Maximalfüllstandes erhöht die Nutzerfreundlichkeit einer Wirtschaftseinheit für die Erstnutzung. Beispielsweise kann der Eigentümer eines Privathaushaltes einen individuellen Maximalfüllstand für den Energiespeicher festlegen. Diese Festlegung ist maßgeblich für den Sekundärnutzen, wie das Erbringen von Regelleistung. Diese Festlegung hat keinen Einfluss auf den Erstnutzen des Speichers. Dies garantiert, dass der Energiespeicher durch negative Regelleistung nie ganz gefüllt.

In einer weiteren vorteilhaften Ausführungsform des erfindungsgemäßen Verfahrens kann für jede der Wirtschaftseinheiten jeweils ein individueller Minimalfüllstand festgelegt werden, wobei jeweils in dem Fall, dass der individuelle Minimalfüllstand nicht festgelegt ist, die dezentrale Steuerungseinheit den individuellen Minimalfüllstand bestimmt. Über ein Eingabegerät, das mit der dezentralen Steuerungseinheit verbunden ist oder gekoppelt werden kann, kann beispielsweise der individuelle Minimalfüllstand des Energiespeichers festgelegt werden.

Die Anzahl der Wirtschaftseinheiten ist identisch mit der Anzahl der individuellen Minimalfüllstände. Die individuellen Minimalfüllstände paarweise verschiedener Wirtschaftseinheiten sind unterschiedlich oder können identisch sein. Wird eine Eingabe für den individuellen Minimalfüllstand nicht vorgenommen, wird der individuelle Minimalfüllstand von der dezentralen Steuerungseinheit gleich 0 gesetzt oder durch die dezentrale Steuerungseinheit bestimmt. Die Möglichkeit der Eingabe eines individuellen Minimalfüllstandes erhöht die Nutzerfreundlichkeit einer Wirtschaftseinheit für die Erstnutzung. Beispielsweise kann der Eigentümer eines Privathaushaltes einen individuellen Minimalfüllstand für den Energiespeicher festlegen. Diese Festlegung ist maßgeblich für den Sekundärnutzen, wie das Erbringen von Regelleistung. Diese Festlegung hat keinen Einfluss auf den Erstnutzen des Speichers. Dies garantiert, dass der Energiespeicher durch positive Regelleistung nie ganz entleert wird
Eine vorteilhafte Ausführungsform des erfindungsgemäßen Verfahrens sieht vor, dass die dezentrale Steuerungseinheit jeweils für jede der Wirtschaftseinheiten einen individuellen Füllstand bestimmt, wobei die erste Gesamtleistung für Regelleistung eine Leistung für Regelleistung in negative Richtung ist, und wobei die individuelle Leistung jeweils gleich null gesetzt wird, wenn jeweils das Produkt aus der individuellen Leistung und dem Zeitraum im Betrag größer ist als die Differenz aus dem individuellen Maximalfüllstand und dem individuellen Füllstand im Betrag.

Analog zur Bestimmung des individuellen Maximalfüllstandes und des individuellen Minimalfüllstandes kann der individuelle Füllstand bestimmt werden. Die Anzahl der Wirtschaftseinheiten ist identisch mit der Anzahl der individueller Füllstände. Die individuellen Füllstände paarweise verschiedener Wirtschaftseinheiten sind unterschiedlich oder können identisch sein. In einer Ausführungsform des erfindungsgemäßen Verfahrens kann ausschließlich Regelleistung in negative Richtung vorgehalten und erbracht werden. Im Allgemeinen werden Leistungen und Regelleistungen (in MW gemessen) berechnet als Füllstände (in MWh gemessen) pro Zeitintervall (in h gemessen). Die Differenz aus dem individuellen Maximalfüllstand und dem individuellen Füllstand gibt an, wie viel elektrische Energie aufgenommen werden kann, bis der individuelle Füllstand den individuellen Maximalfüllstand erreicht. Danach ist keine elektrische Energieaufnahme mehr möglich. In einer alternativen Ausführungsform wird die individuelle Leistung jeweils gleich null gesetzt, wenn beim Vorhalten oder Erbringen von Regelleistung in negative Richtung das Produkt aus einer individuellen Gesamtleistung in negative Richtung, definiert als die Summe der individuellen Momentanleistung in negative Richtung und der individuellen Leistung in negative Richtung, und dem Zeitraum betragsmäßig größer oder gleich ist als die Differenz aus dem individuellen Maximalfüllstand und dem individuellen Füllstand im Betrag.

Eine vorteilhafte Ausführungsform des erfindungsgemäßen Verfahrens sieht vor, dass die dezentrale Steuerungseinheit jeweils für jede der Wirtschaftseinheiten einen individuellen Füllstand bestimmt, wobei die erste Gesamtleistung für Regelleistung eine Leistung für Regelleistung in positive Richtung ist, wobei die individuelle Leistung jeweils gleich null gesetzt wird, wenn jeweils das Produkt aus der individuellen Gesamtleistung in positive Richtung, definiert als die Summe der individuellen Momentanleistung in positive Richtung und der individuellen Leistung in positive Richtung, und dem Zeitraum im Betrag größer ist als die Differenz aus dem individuellen Füllstand und dem individuellen Minimalfüllstand im Betrag.

Analog zur Bestimmung des individuellen Maximalfüllstandes und des individuellen Minimalfüllstandes kann der Füllstand bestimmt werden. In einer Ausführungsform des erfindungsgemäßen Verfahrens kann ausschließlich Regelleistung in positive Richtung vorgehalten und erbracht werden. Im Allgemeinen werden Leistungen und Regelleistungen (in MW gemessen) berechnet als Füllstände (in MWh gemessen) pro Zeitintervall (in h gemessen). Die Differenz aus dem individuellen Füllstand und dem individuellen Minimalfüllstand gibt an, wie viel elektrische Energie abgegeben werden kann, bis der individuelle Füllstand den individuellen Minimalfüllstand erreicht. Danach ist keine elektrische Energieabgabe mehr möglich. Vorzugsweise ist der individuelle Minimalfüllstand gleich 0 MWh. In einer alternativen Ausführungsform wird die individuelle Leistung jeweils gleich null gesetzt wird, wenn beim Vorhalten oder Erbringen von Regelleistung in positive Richtung das Produkt aus einer individuellen Gesamtleistung in positive Richtung, definiert als die Summe von der individuellen Momentanleistung in positive Richtung und der individuellen Leistung in positive Richtung, und dem Zeitraum betragsmäßig größer oder gleich ist als die Differenz aus dem individuellen Minimalfüllstand und dem individuellen Füllstand im Betrag.

In einer weiteren Ausführungsform kann das erfindungsgemäße Verfahren gleichzeitig für das Vorhalten und Erbringen von Regelleistung in positive Richtung und negative Richtung durchgeführt werden. Der Fachmann kann die oben beschriebenen Verfahren leicht kombinieren. Dies hat zur Folge, dass jede Wirtschaftseinheit jeweils zwei individuelle Maximalleistungen an die zentrale Steuerungseinheit übermittelt werden. Dies sind die maximale individuelle Entladeleistung sowie die maximale individuelle Ladeleistung. Weiter hat dies zur Folge, dass die zentrale Steuerungseinheit für jede Wirtschaftseinheit zwei individuelle Leistungen und/oder zwei angepasste individuelle Leistungen bestimmt und an diese übermittelt. Dies sind die individuelle Ladeleistung sowie die individuelle Entladeleistung und/oder die angepasste individuelle Ladeleistung sowie die angepasste individuelle Entladeleistung. Die oben beschriebenen Verfahrensschritte werden entsprechend analog ausgeführt.

Das erfindungsgemäße System zum Erbringen von Regelleistung für ein elektrisches Energieversorgungsnetz mit einer Mehrzahl von Energieerzeugern, einer Mehrzahl von Energieabnehmern und einer zentralen Steuerungseinheit weist die für die Durchführung des erfindungsgemäßen Verfahrens notwendigen Mittel und Einrichtungen auf.

Die Erfindung ist in den unabhängigen Ansprüchen definiert. Bevorzugte Ausführungsformen sind Gegenstand der abhängigen Ansprüche.

### Figurenbeschreibung

Nachfolgend werden bevorzugte Ausführungsformen der Erfindung anhand der beiliegenden Figuren erläutert. Es zeigen
- Fig. 1: eine schematische Ansicht des elektrischen Energieversorgungsnetzes 1, welches mit dem Gesamtenergiespeicher 7 verbunden ist,
- Fig. 2: ein Ablaufdiagramm des erfindungsgemäßen Verfahrens für das Vorhalten, durch jeweils eine der Wirtschaftseinheiten 8, von der angepassten individuellen Leistung für Regelleistung,
- Fig. 3A: ein Ablaufdiagramm des erfindungsgemäßen Verfahrens zur Bestimmung, für jeweils eine der Wirtschaftseinheiten 8, durch die zentrale Steuerungseinheit 6, der individuellen Leistung und des individuellen Zeitpunkts für das Vorhalten von Regelleistung in positive Richtung,
- Fig. 3B: ein Ablaufdiagramm des erfindungsgemäßen Verfahrens zur Bestimmung, für jeweils eine der Wirtschaftseinheiten 8, durch die zentrale Steuerungseinheit 6, der individuellen Leistung und des individuellen Zeitpunkts für das Vorhalten von Regelleistung in negative Richtung,
- Fig. 4: ein Ablaufdiagramm des erfindungsgemäßen Verfahrens zur Bestimmung, für die Wirtschaftseinheiten 8, durch die zentrale Steuerungseinheit 6, der angepassten individuellen Leistungen und des Zeitraums für das Vorhalten von Regelleistung,

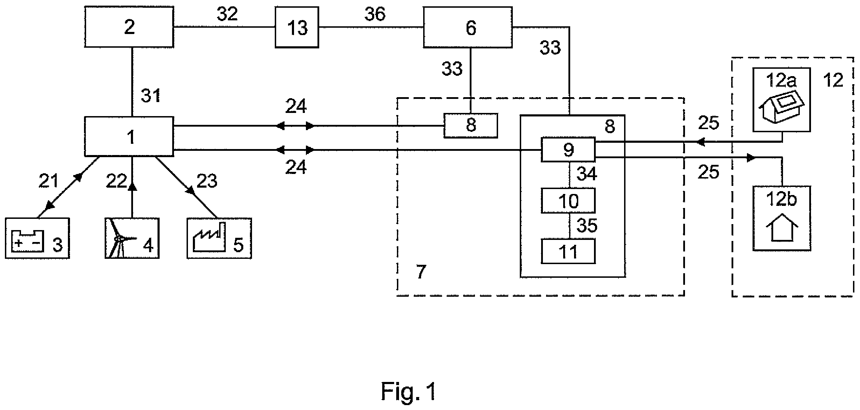

Fig. 1 zeigt ein elektrisches Energieversorgungsnetz 1, welches mit einem Gesamtenergiespeicher 7 verbunden ist. Weiter zeigt Fig. 1 erste bis fünfte Leitungskomponenten 21 bis 25 und erste bis sechste Datenverbindungen 31 bis 36. Das elektrische Energieversorgungsnetz 1 ist über die vierte Leitungskomponente 24 mit dem Gesamtenergiespeicher 7 verbunden. Weiter ist das elektrische Energieversorgungsnetz 1 über die ersten bis dritten Leitungskomponenten 21 bis 23 für elektrische Energieflüsse mit folgenden Komponenten verbunden: einer Mehrzahl von Energiezwischenspeichern 3 über die erste Leitungskomponenten 21, einer Mehrzahl von Energieerzeugern 4 über die zweite Leitungskomponenten 22 und einer Mehrzahl von Energieabnehmern 5 über die dritte Leitungskomponenten 23. Der Gesamtenergiespeicher 7 umfasst eine Mehrzahl von Wirtschaftseinheiten 8. Jede Wirtschaftseinheit 8 umfasst mindestens einen Energiespeicher 9, mindestens eine dezentrale Steuerungseinheit 10 und mindestens ein Eingabegerät 11. Es ist möglich, dass das Eingabegerät 11 mobil ausgestaltet ist und beispielsweise eine mobile App oder ähnliches umfasst. Die Wirtschaftseinheiten 8 sind jeweils beispielsweise ein Privathaushalt, der mit dem elektrischen Energieversorgungsnetz 1 verbunden ist und der mittels Solarzellen Solarstrom produziert. Der Solarstrom und der Strom aus dem elektrischen Energieversorgungsnetz 1 wird jeweils dem Energiespeicher 9 zugeführt und/oder entnommen. Die Energiespeicher 9 können jeweils elektrische Energie speichern.

Das elektrische Energieversorgungsnetz 1 ist über eine erste Datenverbindung 31 mit einem Netzbetreiber 2 verbunden. Die ersten bis sechsten Datenverbindungen 31 bis 36 können drahtgebundene und/oder drahtlose Datenverbindungen sein.

Die ersten bis fünften Leitungskomponenten 21 bis 25 beinhalten weitere, hier nicht dargestellte Komponenten, wie beispielsweise Schaltstationen, Transformatoren oder Ähnliches. Die dargestellten Pfeile in den Energieflüssen der ersten bis fünften Leitungskomponenten 21 bis 25 symbolisieren die Leistungsrichtung in den ersten bis fünften Leitungskomponenten 21 bis 25. Der Betrag einer Leistung kann variiert werden. Die Richtung der Leistung in der ersten Leitungskomponente 21, in der vierten Leitungskomponente 24 und der fünften Leitungskomponente 25 kann variiert werden. Der Betrag einer Leistung ist in Fig. 1 nicht dargestellt. Die elektrische Leistung wird in der zweiten Leitungskomponente 22 von einem Energieerzeuger 4 zu dem elektrischen Energieversorgungsnetz 1 übertragen. Die elektrische Leistung wird in der dritten Leitungskomponente 23 von dem elektrischen Energieversorgungsnetz 1 zu einem Energieabnehmer 5 übertragen.

Das Ausführungsbeispiel der Fig. 1 zeigt eine Batterie als den Energiezwischenspeicher 3. Das Ausführungsbeispiel der Fig. 1 zeigt eine Windkraftanlage als den Energieerzeuger 4. Das Ausführungsbeispiel der Fig. 1 zeigt eine Fabrik als den Energieabnehmer 5. Hier sind verschiedenste Ausführungsformen für den Energiezwischenspeicher 3, den Energieerzeuger 4 und Energieabnehmer 5 denkbar. Ein Netzbetreiber 2 ist über eine erste Datenverbindung 31 mit dem elektrischen Energieversorgungsnetz 1 verbunden. Der Netzbetreiber 2 ist eine Einrichtung zur Verwaltung und Überwachung der Infrastruktur des elektrischen Energieversorgungsnetzes 1. Der Netzbetreiber 2 hält die Systemverantwortung für das Netz. Der Netzbetreiber 2 umfasst mindestens einen Übertragungsnetzbetreiber und/oder mindestens einen Verteilnetzbetreiber. Der Netzbetreiber 2 kann über die erste Datenverbindung 31 für das elektrische Energieversorgungsnetz 1 initiieren, dass die Beträge der elektrischen Leistungen in den ersten bis vierten Leistungskomponenten 21 bis 24 geändert werden. Der Netzbetreiber 2 kann über die erste Datenverbindung 31 für das elektrische Energieversorgungsnetz 1 initiieren, dass die Richtungen der Leistungen in den ersten bis vierten Leistungskomponenten 21 und 24 geändert werden.

Der Netzbetreiber 2 kommuniziert über die zweite Datenverbindung 32 mit einem Poolanbieter 13. Über die zweite Datenverbindung 32 werden Daten über die Höhe und die Richtung von Regelleistungen und Zeiträume für das Vorhalten von Regelleistungen kommuniziert. Es ist möglich, über die zweite Datenverbindung 32 weitere Informationen auszutauschen.

Der Poolanbieter 13 kommuniziert über die sechste Datenverbindung 36 mit einer zentralen Steuerungseinheit 6. Über die sechste Datenverbindung 36 werden Daten über die Höhe und die Richtung von Regelleistungen und Zeiträume und Zeitpunkte für das Vorhalten von Regelleistungen kommuniziert. Es ist möglich, über die sechste Datenverbindung 36 weitere Informationen auszutauschen.

Die Summe der individuellen Füllstände für alle Wirtschaftseinheiten wird als Gesamtfüllstand bezeichnet. Die Summe der individuellen Maximalfüllstände für alle Wirtschaftseinheiten wird als Maximalfüllstand bezeichnet. Die Summe der individuellen Minimalfüllstände für alle Wirtschaftseinheiten wird als Minimalfüllstand bezeichnet. Der Begriff Füllstand ist im Folgenden eine Verallgemeinerung aller in dem erfindungsgemäßen Verfahren und System auftretenden Füllstände, das heißt, er umfasst den individuellen Füllstand, den individuellen Maximalfüllstand, den individuellen Minimalfüllstand, den Gesamtfüllstand, den Maximalfüllstand und den Minimalfüllstand. Bei dem individuellen Füllstand, dem individuellen Maximalfüllstand und dem individuellen Minimalfüllstand handelt es sich um Speicherfüllstände. Speicherfüllstände sind ein Maß für eine Menge an elektrischer Energie.

Die Aggregation der individuellen Momentanleistungen für alle Wirtschaftseinheiten wird als Momentanleistung bezeichnet. Die Aggregation der individuellen Maximalleistungen für alle Wirtschaftseinheiten wird als Maximalleistung bezeichnet. Der Begriff Leistung umfasst im Folgenden in dem erfindungsgemäßen Verfahren und System die individuelle Momentanleistung, die individuelle Maximalleistung, das individuelle Leistungspotential, die individuelle Leistung, die Leistungsreserve, die individuelle Leistungsreserve, die erste Gesamtleistung, die zweite Gesamtleistung und die angepasste individuelle Leistung. Bei Leistungen und Regelleistungen handelt es sich um elektrische Leistungen. Leistungen und Regelleistungen haben ein positives Vorzeichen und werden in positive Richtung erbracht, wenn es sich um Entladeleistung handelt. Entladeleistung umfasst eine Übertragung elektrischer Energie von einer der Wirtschaftseinheiten 8 oder von dem Gesamtenergiespeicher 7 in das elektrische Energieversorgungsnetz. Leistungen und Regelleistungen haben ein negatives Vorzeichen und werden in negative Richtung erbracht, wenn es sich um Ladeleistung handelt. Ladeleistung umfasst eine Übertragung elektrischen Energie aus dem elektrischen Energieversorgungsnetz in eine der Wirtschaftseinheiten 8 oder den Gesamtenergiespeicher 7.
Die zentrale Steuerungseinheit 6 kommuniziert über die dritte Datenverbindung 33 mit der dezentralen Steuerungseinheit 10 in einer Wirtschaftseinheit 8. Über die dritte Datenverbindung 33 werden Daten über die Höhe und die Richtung von Stromflüssen für Regelleistungen und Zeiträume für das Vorhalten von Stromflüssen für Regelleistungen kommuniziert. Es ist möglich, über die dritte Datenverbindung 33 weitere Informationen auszutauschen. Weiter werden über die dritte Datenverbindung 33 Messwerte des Gesamtenergiespeichers 7 und Vorgaben an den Gesamtenergiespeicher 7 kommuniziert. Die Messwerte und die Vorgaben betreffen die Höhe und die Richtung von Leistungen, Werte für verschiedene Füllstände sowie Zeiträume und Zeitpunkte.

Die Energiespeicher 9 sind für eine bidirektionale Energieübertragung jeweils über die vierte Leitungskomponente 24 mit dem elektrischen Energieversorgungsnetz 1 verbunden. Weiter sind die Energiespeicher 9 jeweils über die vierte Datenverbindung 34 mit der dezentralen Steuerungseinheit 10 verbunden. Über die vierte Datenverbindung 34 werden Daten über die Höhe und die Richtung von Leistungen für Regelleistungen und Zeiträume für das Vorhalten von Stromflüssen für Regelleistungen kommuniziert. Es ist möglich, über die vierte Datenverbindung 34 weitere Informationen auszutauschen. Weiter werden über die vierte Datenverbindung 34 Messwerte und Vorgaben kommuniziert. Die Messwerte und die Vorgaben betreffen die Höhe und die Richtung von Leistungen, Werte für verschiedene Füllstände sowie Zeiträume und Zeitpunkte. Weiter können Werte für Leistungen und Kapazitäten der Energiespeicher 9 jeweils durch die dezentrale Steuerungseinheit 10 über die vierte Datenverbindung 34 bestimmt werden.

Die dezentralen Steuerungseinheiten 10 sind jeweils über eine fünfte Datenverbindung 35 mit dem Eingabegerät 11 verbunden. In das Eingabegerät 11 können mindestens Werte für Leistung und Kapazität eingegeben werden. Diese Werte für Leistung und Kapazität werden über die fünfte Datenverbindung 35 übermittelt. Bei dem Eingabegerät 11 kann es sich um ein fest angebrachtes Gerät handeln. Jedoch kann es sich bei dem Eingabegerät alternativ um ein tragbares Gerät handeln.

Die Energiespeicher 9 sind jeweils über eine fünfte Leitungskomponente 25 mit einem externen Energiesystem 12 verbunden. Bei dem externen Energiesystem 12 handelt es sich um externe Energieerzeuger 12a und/oder externe Energieverbraucher 12b. Beispielsweise kommen Solarzellen als externe Energieerzeuger 12a, die Strom erzeugen, in Betracht. Als externe Energieverbraucher 12b kommen beispielsweise elektrische Geräte des Privathaushalts in Betracht.

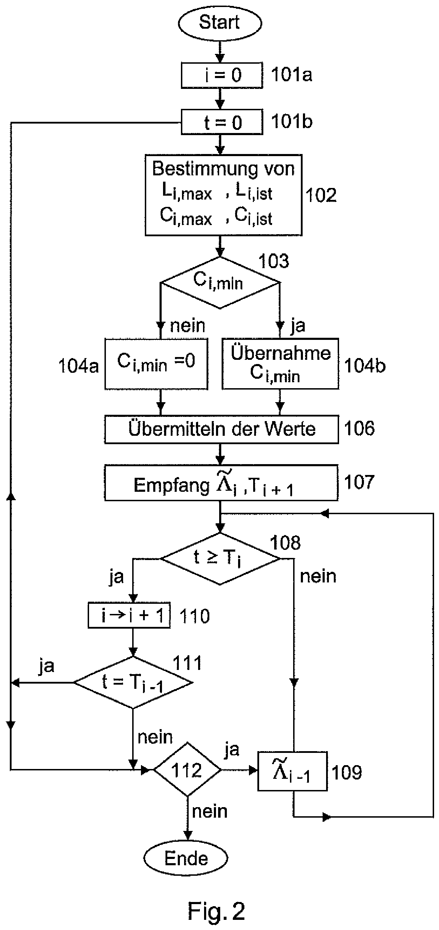

In Fig. 2 ist ein Ablaufdiagramm des erfindungsgemäßen Verfahrens für das Vorhalten, durch jeweils eine der Wirtschaftseinheiten 8, von einer angepassten individuellen Leistung für Regelleistung dargestellt. In der hier beschriebenen beispielhaften Ausführung des erfindungsgemäßen Verfahrens umfasst der Gesamtenergiespeicher 7 eintausend Wirtschaftseinheiten 8. Das erfindungsgemäße Verfahren kann für beliebig viele Wirtschaftseinheiten 8 in dem Gesamtenergiespeicher 7 ausgeführt werden. Wenn einer der Energiespeicher 9 Regelleistung für das elektrische Energieversorgungsnetz 1 vorhalten soll, führt die über die vierte Datenverbindung 24 mit diesem Energiespeicher 9 verbundene dezentrale Steuerungseinheit 10 die Schritte des Ablaufdiagramms in Fig. 2 aus. Bei Bedarf kann jede der Wirtschaftseinheiten 8 jeweils die für den jeweiligen Zeitraum vorgehaltene angepasste individuelle Leistung für Regelleistung in positive und/oder negative Richtung erbringen. Jede dezentrale Steuerungseinheit 10 kann das erfindungsgemäße Verfahren gemäß dem Ablaufdiagramm in Fig. 2 ausführen. Im Ablaufdiagramm von Fig. 2 ist das Verfahren für eine der eintausend Wirtschaftseinheiten 8 beschrieben.

Im Folgenden werden Leistungen und Regelleistungen in Megawatt (MW), Kapazitäten in Megawattstunden (MWh) und Zeiten in Stunden (h) gemessen. Im Folgenden haben Leistungen und Regelleistungen, die nicht 0 sind, ein positives oder ein negatives Vorzeichen. Ein positives Vorzeichen der entsprechenden Leistung bedeutet, dass elektrische Energie aus dem Energiespeicher 9 entnommen wird. Ein negatives Vorzeichen der entsprechenden Leistung bedeutet, dass elektrische Energie in den Energiespeicher 9 übertragen wird.

Nach Start des Verfahrens wird in Verfahrensschritt 101a ein Zähler auf i = 0 und in Verfahrensschritt 101b eine interne Zeit auf t = 0 Sekunden gesetzt. Die interne Zeit nimmt analog zur Realzeit zu, während das Verfahren gemäß Figur 2 ausgeführt wird.

In Verfahrensschritt 102 wird eine individuelle Maximalleistung L_{i,max}, eine individuelle Momentanleistung L_{i,ist}, ein individueller Maximalfüllstand C_{i,max} und ein individueller Füllstand C_{i,ist} des Energiespeichers 9 bestimmt. Je nachdem, ob Regelleistung in positive oder negative Richtung erbracht werden soll, ist das Vorzeichen der individuellen Maximalleistung L_{i,max} positiv oder negativ. Dies bedeutet, dass die individuelle Maximalleistung L_{i,max} eine maximale Entladeleistung oder eine maximale Ladeleistung ist. Das erfindungsgemäße Verfahren gemäß Fig. 2 ist für beide Fälle identisch auszuführen. Es kann zu jeder Zeit von der zentralen Steuerungseinheit 6 bestimmt werden, ob Regelleistung in positive und/oder negative Richtung durch die Wirtschaftseinheiten 8 erbracht werden soll.

Diese Entscheidung wird von der zentralen Steuerungseinheit 6 jeweils an die dezentrale Steuerungseinheit 10 über die dritte Datenverbindung 33 übertragen. Entsprechend wird in Verfahrensschritt 102 für die individuelle Maximalleistung L_{i,max} die maximale Entladeleistung und/oder die maximale Ladeleistung bestimmt.

Die individuelle Momentanleistung L_{i,ist} charakterisiert die aktuellen Energieflüsse in oder aus dem Energiespeicher 9 in den Leitungskomponenten 24 und 25. Das Vorzeichen der individuellen Maximalleistung L_{i,max} ist positiv oder negativ, je nachdem ob Entlade- oder Ladeleistung erbracht wird, beides kann gleichzeitig oder getrennt voneinander bestimmt werden. Der individuelle Maximalfüllstand C_{i,max} bestimmt, wie viel Energie maximal im Energiespeicher 9 gespeichert werden kann. Der individuelle Füllstand C_{i,ist} bestimmt, wie viel Energie im Energiespeicher 9 gespeichert ist.

In Verfahrensschritt 103 wird abgefragt, ob mittels des Eingabegerätes 11 ein individueller Minimalfüllstand C_{i,min} festgelegt ist. Wird Verfahrensschritt 103 verneint, wird mit Verfahrensschritt 104a fortgefahren. Wird Verfahrensschritt 103 bejaht, wird mit Verfahrensschritt 104b fortgefahren. Der individuelle Minimalfüllstand C_{i,min} bestimmt, ab welchem Minimum an Energie im Speicher keine weitere Leistung für Regelleistung in positive Richtung bereitgestellt werden soll.

In Verfahrensschritt 104a wird der individuelle Minimalfüllstand Ci,min gleich 0 MWh gesetzt. Alternativ kann die dezentrale Steuerungseinheit den individuellen Minimalfüllstand des Energiespeichers 9 bestimmen. In Verfahrensschritt 104b wird der individuelle Minimalfüllstand C_{i,min} gleich dem mittels des Eingabegerätes 11 festgelegten Wert für den individuellen Minimalfüllstand C_{i,min} gesetzt.

Es ist an dieser Stelle möglich, einen Verfahrensschritt einzubauen, bei dem abgefragt wird, ob mittels des Eingabegerätes 11 ein individueller Maximalfüllstand C_{i,max} festgelegt ist. Wird dieser Verfahrensschritt verneint, wird der individuelle Maximalfüllstand C_{i,max} gleich dem systembedingten Maximalwert für den individuellen Maximalfüllstand C_{i,max} gesetzt. Wird dieser Verfahrensschritt bejaht, wird der individuelle Maximalfüllstand C_{i,max} gleich dem mittels des Eingabegerätes 11 festgelegten Wert für den individuellen Maximalfüllstand C_{i,max} gesetzt. Der individuelle Maximalfüllstand C_{i,max} bestimmt, ab welchem Maximum an Energie im Speicher keine weitere Leistung für Regelleistung in negative Richtung bereitgestellt werden soll.

In Verfahrensschritt 106 werden die bestimmten Werte für die individuelle Maximalleistung L_{i,max}, die individuelle Momentanleistung L_{i,ist}, den individuellen Maximalfüllstand C_{i,max}, den individuellen Füllstand C_{i,ist} und den individuellen Minimalfüllstand C_{i,min} über die dritte Datenverbindung 33 an die zentrale Steuerungseinheit 6 übermittelt.

In Verfahrensschritt 107 empfängt die dezentrale Steuerungseinheit über die dritte Datenverbindung 33 von der zentralen Steuerungseinheit 6 Werte für eine angepasste individuelle Leistung Λ̃*ᵢ* und einen Zeitpunkt Tᵢ₊₁. Der Zeitpunkt Tᵢ ist ein Startzeitpunkt für den Zeitraum zwischen dem Zeitpunkt Tᵢ und dem Zeitpunkt Tᵢ₊₁. Beispielsweise ist der Zeitraum T₀ gleich 0 gesetzt.

In Verfahrensschritt 108 wird überprüft, ob die interne Zeit t größer oder gleich dem Zeitpunkt Tᵢ ist. Wird Verfahrensschritt 108 verneint, wird mit Verfahrensschritt 109 fortgefahren, wird Verfahrensschritt 108 bejaht, wird mit Verfahrensschritt 110 fortgefahren.

In Verfahrensschritt 109 wird die Leistung, die ausschließlich für die Nutzung als Regelleistung vorgehalten wird, auf den Wert der angepassten individuellen Leistung Λ̃_{*i*-1} gesetzt. Sollte der Zähler i gleich 0 betragen, wird die angepasste individuelle Leistung Λ̃_{*i*-1} gleich 0 MW gesetzt. Damit wird keine Leistung für Regelleistung vorgehalten. In dem Zeitraum, der zwischen dem Zeitpunkt Tᵢ und dem Zeitpunkt Tᵢ₊₁ liegt, wird somit die Leistung, die ausschließlich für die Nutzung als Regelleistung vorgehalten wird, auf den Wert der angepassten individuellen Leistung Λ̃*ᵢ* gesetzt. Nach Verfahrensschritt 109 wird erneut mit Verfahrensschritt 108 fortgefahren.

In Verfahrensschritt 110 wird der Zähler von i auf i+1 gesetzt.

In Verfahrensschritt 111 wird überprüft, ob die interne Zeit t gleich dem Zeitpunkt Tᵢ₋₁ ist. Wird Verfahrensschritt 111 verneint, wird mit Verfahrensschritt 112 fortgefahren, wird Verfahrensschritt 111 bejaht, wird mit Verfahrensschritt 101b und mit Verfahrensschritt 112 fortgefahren. Beispielsweise werden im Falle t=T₂ in Verfahrensschritt 111 im darauffolgenden Verfahrensschritt 107 die Werte für den Zeitpunkt T₄ und die angepasste individuelle Leistung Λ̃₃ empfangen. In dem Zeitraum zwischen den Zeitpunkten T₃ und T₄ wird die gemäß Verfahrensschritt 109 die angepasste individuelle Leistung Λ̃₃ vorgehalten.

In Verfahrensschritt 112 wird abgefragt, ob der Energiespeicher 9 weiter an dem Erbringen oder Vorhalten von Regelleistung teilnehmen soll. Wird Verfahrensschritt 112 bejaht, wird mit Verfahrensschritt 109 fortgefahren. Wird Verfahrensschritt 112 verneint, ist das erfindungsgemäße Verfahren gemäß Fig. 2 beendet.

Ob ein Energiespeicher 9 weiter am Erbringen oder Vorhalten von Regelleistung teilnehmen soll, wird beispielsweise durch eine Eingabe in das Eingabegerät 11 oder durch eine Vorgabe durch die zentrale Steuerungseinheit 6 bestimmt.

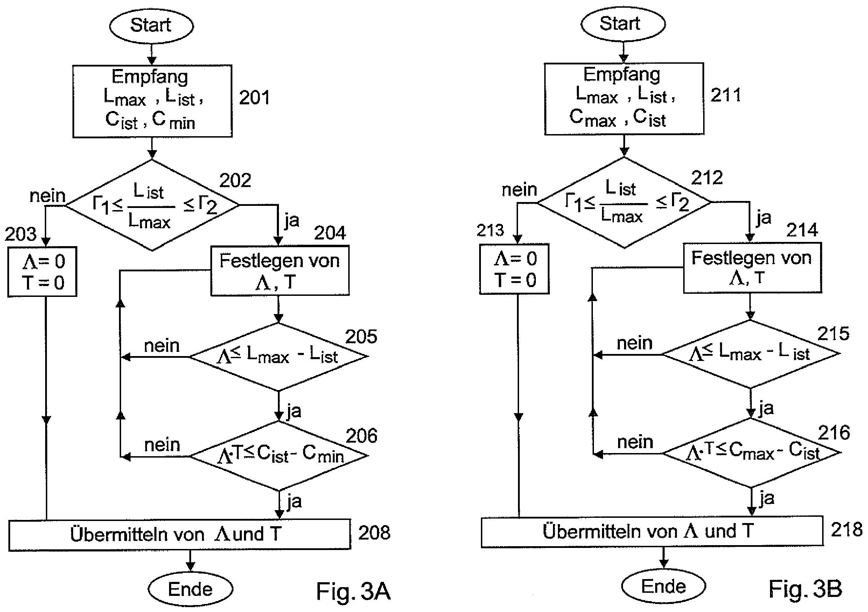

In Fig. 3A zeigt ein Ablaufdiagramm einer Ausführungsform des erfindungsgemäßen Verfahrens zur Bestimmung, für jeweils eine der Wirtschaftseinheiten 8, durch die zentrale Steuerungseinheit 6, der individuellen Leistung in positive Richtung A und des individuellen Zeitraums T. Jeweils für jede der eintausend Wirtschaftseinheiten 8, die Regelleistung in positive Richtung für das elektrische Energieversorgungsnetz 1 vorhalten oder erbringen, führt die zentrale Steuerungseinheit 6 das Verfahren aus Fig. 3A aus.

In Verfahrensschritt 201 werden Werte für eine individuelle Maximalleistung in positive Richtung Lₘₐₓ, eine individuelle Momentanleistung in positive Richtung Lᵢₛₜ, einen individuellen Füllstand Cᵢₛₜ und einen individuellen Minimalfüllstand Cₘᵢₙ empfangen. Wie nachfolgend beschrieben, werden diese Werte in Verfahrensschritt 302 übermittelt.

In Verfahrensschritt 202 wird bestimmt, ob sich der Quotient aus der individuellen Momentanleistung und der individuellen Maximalleistung innerhalb eines Intervalls befindet. Das Intervall ist nach unten durch einen ersten individuellen Richtwert r₁ und nach oben durch einen zweiten individuellen Richtwert r₂ begrenzt. Bevorzugt nehmen der erste individuelle Richtwert r₁ und zweite individuelle Richtwert r₂ Werte aus dem Intervall [0,1] oder aus dem Intervall [-1,+1] an. Wird dies verneint, wird mit Verfahrensschritt 203 fortgefahren, wird dies bejaht, wird mit Verfahrensschritt 204 fortgefahren.

In Verfahrensschritt 203 wird eine individuelle Leistung Λ gleich 0 MW gesetzt. Weiter wird der individuelle Zeitraum T gleich 0 Sekunden gesetzt. Nach Verfahrensschritt 203 wird mit Verfahrensschritt 208 fortgefahren.

In Verfahrensschritt 204 wird ein Wert für die individuelle Leistung Λ und ein individueller Zeitraum T festgelegt.

In Verfahrensschritt 205 wird überprüft, ob die individuelle Leistung Λ kleiner oder gleich ist als das individuelle Leistungspotential in positive Richtung, also die Differenz aus der individuellen Maximalleistung Lₘₐₓ und der individuellen Momentanleistung Lᵢₛₜ. Wird Verfahrensschritt 205 verneint, wird mit Verfahrensschritt 204 fortgefahren. Wird Verfahrensschritt 205 bejaht, wird mit Verfahrensschritt 206 fortgefahren.

In Verfahrensschritt 206 wird überprüft, ob das Produkt aus der individuellen Leistung Λ und dem individuellen Zeitraum T kleiner oder gleich ist als die Differenz aus dem individuellen Füllstand Cᵢₛₜ und dem individuellen Minimalfüllstand Cₘᵢₙ. Wird Verfahrensschritt 206 bejaht, wird mit Verfahrensschritt 208 fortgefahren. Wird Verfahrensschritt 206 verneint, wird mit Verfahrensschritt 204 fortgefahren.

In Verfahrensschritt 208 werden die individuelle Leistung A und der individuelle Zeitraum T ausgegeben, übermittelt und, wie im Nachfolgenden beschrieben, in Verfahrensschritt 303 empfangen.

Fig. 3B zeigt ein Ablaufdiagramm einer Ausführungsform des erfindungsgemäßen Verfahrens zur Bestimmung, für jeweils eine der Wirtschaftseinheiten 8, durch die zentrale Steuerungseinheit 6, der individuellen Leistung in negative Richtung A und des individuellen Zeitraums T. Jeweils für jede der eintausend Wirtschaftseinheiten 8, die Regelleistung in negative Richtung für das elektrische Energieversorgungsnetz 1 vorhalten oder erbringen, führt die zentrale Steuerungseinheit 6 das Verfahren aus Fig. 3B aus.

In Verfahrensschritt 211 werden Werte für eine individuelle Maximalleistung in negative Richtung Lₘₐₓ, eine individuelle Momentanleistung in negative Richtung Lᵢₛₜ, einen individuellen Maximalfüllstand Cₘₐₓ und einen individuellen Füllstand Cᵢₛₜ empfangen. Wie weiter unten beschrieben, werden diese Werte in Verfahrensschritt 302 übermittelt.

In Verfahrensschritt 212 wird bestimmt, ob sich der Quotient aus der individuellen Momentanleistung Lᵢₛₜ und der individuellen Maximalleistung Lₘₐₓ innerhalb eines Intervalls befindet. Das Intervall ist nach unten durch einen ersten individuellen Richtwert r₁ und nach oben durch einen zweiten individuellen Richtwert r₂ begrenzt. Bevorzugt nehmen der erste individuelle Richtwert r₁ und zweite individuelle Richtwert r₂ Werte aus dem Intervall [0,1] oder aus dem Intervall [-1,+1] an. Wird dies verneint, wird mit Verfahrensschritt 213 fortgefahren, wird dies bejaht, wird mit Verfahrensschritt 214 fortgefahren.

In Verfahrensschritt 213 wird eine individuelle Leistung Λ gleich 0 MW gesetzt. Weiter wird der individuelle Zeitraum T gleich 0 Sekunden gesetzt. Nach Verfahrensschritt 213 wird mit Verfahrensschritt 218 fortgefahren.

In Verfahrensschritt 214 wird ein Wert für die individuelle Leistung Λ und ein individueller Zeitraum T festgelegt.

In Verfahrensschritt 215 wird überprüft, ob die individuelle Leistung Λ kleiner oder gleich ist als das individuelle Leistungspotential in negative Richtung, also die Differenz aus der individuellen Maximalleistung Lₘₐₓ und der individuellen Momentanleistung Lᵢₛₜ. Wird Verfahrensschritt 215 verneint, wird mit Verfahrensschritt 214 fortgefahren. Wird Verfahrensschritt 215 bejaht, wird mit Verfahrensschritt 216 fortgefahren.

In Verfahrensschritt 216 wird überprüft, ob das Produkt aus der individuellen Leistung Λ und dem individuellen Zeitraum T kleiner oder gleich ist als die Differenz aus dem individuellen Maximalfüllstand Cₘₐₓ und dem individuellen Füllstand Cᵢₛₜ. Wird Verfahrensschritt 216 bejaht, wird mit Verfahrensschritt 218 fortgefahren. Wird Verfahrensschritt 216 verneint, wird mit Verfahrensschritt 214 fortgefahren.

In Verfahrensschritt 218 werden die individuelle Leistung Λ und der individuelle Zeitraum T ausgegeben, übermittelt und, wie im Nachfolgenden beschrieben, in Verfahrensschritt 303 empfangen.

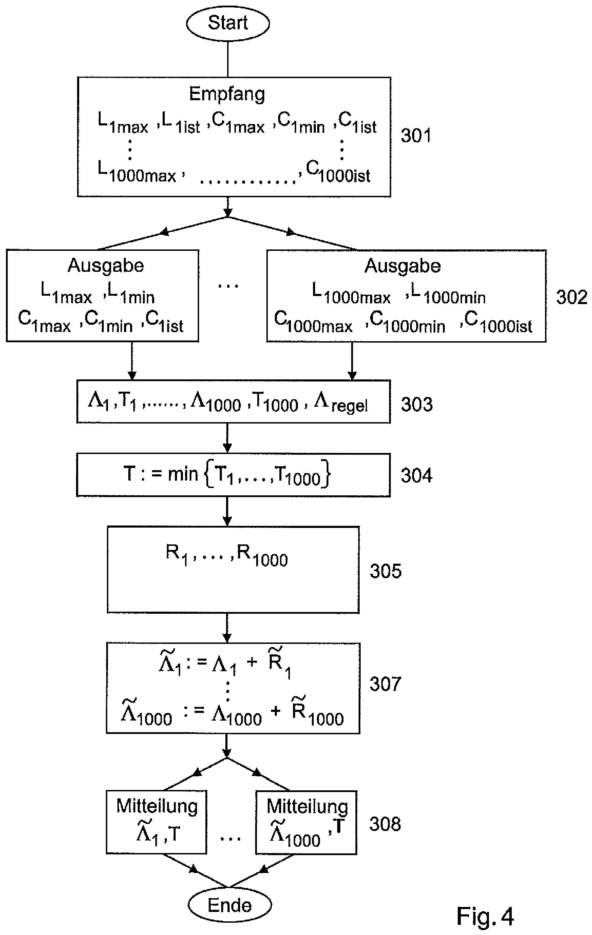

Fig. 4 zeigt ein Ablaufdiagramm des erfindungsgemäßen Verfahrens zur Bestimmung, für die Wirtschaftseinheiten 8, durch die zentrale Steuerungseinheit 6, der angepassten individuellen Leistungen und des Zeitraums für das Vorhalten von Regelleistung,

Das Verfahren gemäß Figur 4 wird analog für die beiden Fälle ausgeführt, je nachdem, ob Regelleistung in positive Richtung und/oder negative Richtung für das elektrische Energieversorgungsnetz 1 vorgehalten werden soll. Bevor die zentrale Steuerungseinheit 6 das Verfahren gemäß Figur 4 ausführt, wird von der zentralen Steuerungseinheit 6 oder von dem Poolanbieter 13 entschieden, ob Regelleistung in positive Richtung und/oder negative Richtung für das elektrische Energieversorgungsnetz 1 vorgehalten werden soll. Entsprechend haben die Werte für die individuellen Maximalleistungen L_{j,max}, die individuellen Leistungen Λ₁,...,Λ₁₀₀₀, die vorzuhaltende Regelleistung Λ_{Regel}, die individuellen Leistungsreserven R₁,...,R₁₀₀₀ und die angepassten individuellen Leistungen Λ̃₁,...,Λ̃₁₀₀₀ ein positives oder ein negatives Vorzeichen.

In Verfahrensschritt 301 werden die in Verfahrensschritt 106 jeweils von der Wirtschaftseinheit an die zentrale Steuerungseinheit übermittelten Werte für die individuelle Maximalleistung L_{i,max}, die individuelle Momentanleistung L_{i,ist}, den individuellen Maximalfüllstand C_{i,max}, den individuellen Füllstand C_{i,ist} und den individuellen Minimalfüllstand C_{i,min} empfangen. Da in dem Verfahren gemäß Fig. 4 kein Zähler i verwendet wird, werden diese Werte ohne den Index i angegeben. Das heißt, dass in Verfahrensschritt 301 die Werte für die individuelle Maximalleistung Lₘₐₓ, die individuelle Momentanleistung Lᵢₛₜ, den individuellen Maximalfüllstand Cₘₐₓ, den individuellen Füllstand Cᵢₛₜ und den individuellen Minimalfüllstand Cmin empfangen werden.

Wie oben beschrieben, ist in Fig. 2 das erfindungsgemäße Verfahren für eine Wirtschaftseinheit dargestellt. Im Gegensatz dazu beschreibt Fig. 4 das erfindungsgemäße Verfahren für den Gesamtenergiespeicher 7, also für alle eintausend Wirtschaftseinheiten 8. Um die in Verfahrensschritt 301 empfangenen Werte für die jeweiligen Wirtschaftseinheiten unterscheiden zu können, werden die in 301 empfangenen Werte durch einen Index j gekennzeichnet. Dieser Index nimmt symbolisch die Werte 1, 2, 3, ..., 1000 an, wobei der Wert des Index den jeweiligen Energiespeicher bestimmt. Die Zuordnung der Werte 1, 2, 3, ..., 1000 für die Wirtschaftseinheiten 8 dient in dem Verfahren gemäß Fig. 4 lediglich der Orientierung.

In Verfahrensschritt 302 werden die Werte für die individuelle Maximalleistung L_{j,max}, die individuelle Momentanleistung L_{j,ist}, den individuellen Maximalfüllstand C_{j,max}, den individuellen Füllstand C_{j,ist} und den individuellen Minimalfüllstand C_{j,min} für jeden Index j=1,...,1000 ausgegeben. Dies sind die Werte, die, wie oben beschrieben, in Verfahrensschritt 201 oder 211 empfangen werden. Wie oben beschrieben, wird das erfindungsgemäße Verfahren gemäß Fig. 3A und 3B für jede der eintausend Wirtschaftseinheiten separat ausgeführt.

In Verfahrensschritt 303 werden die 1000 Werte für die individuelle Leistung Λ und die individuellen Zeiträume T aus Verfahrensschritt 208 empfangen und mit dem Index j=1,...,1000, gemäß der entsprechenden Wirtschaftseinheit 8, gekennzeichnet. Dies ergibt die individuellen Leistungen Λ₁,..,Λ₁₀₀₀ und die individuellen Zeiträume T₁,...,T₁₀₀₀. Weiter wird über die zweite Datenverbindung 32 und die sechste Datenverbindung 36 ein Wert für die vorzuhaltende Regelleistung Λ_{Regel} empfangen. Alternativ ist hier auch der Fall möglich, dass der Wert für die vorzuhaltende Regelleistung Λ_{Regel} während dem Vorhalten und/oder Erbringen aktualisiert wird. In diesem Fall wird das Verfahren gemäß Fig. 4 ab Verfahrensschritt 303 neu durchgeführt.

In Verfahrensschritt 304 wird das Minimum aus den eintausend individuellen Zeiträumen T₁,...,T₁₀₀₀ bestimmt, wobei Wirtschaftseinheiten, deren individuelle Leistung je Leistungsrichtung und Zeitraum in Verfahrensschritt 203 bzw. 213 mit Null festgelegt wurden, nicht in die Berechnung des Minimums eingehen. Dieses Minimum definiert einen Zeitraum T. Alternativ kann der Zeitraum T festgelegt sein. Für den Fall des Festlegens von T nehmen die Wirtschaftseinheiten, deren in Verfahrensschritt 303 empfangener Zeitraum kleiner als der Zeitraum T ist, nicht am Vorhalten und/oder Erbringen von Regelleistung im Zeitraum T teil. Das heißt die entsprechenden individuellen Leistungen in den Verfahrensschritten 204 und 214 und die entsprechenden individuellen Leistungsreserven in Verfahrensschritt 305 werden gleich 0 gesetzt.

In Verfahrensschritt 305 wird für jede der 1000 Wirtschaftseinheiten jeweils die individuelle Leistungsreserve in positive Richtung und die individuelle Leistungsreserve in negative Richtung bestimmt. Der Betrag der individuellen Leistungsreserve ist jeweils gegeben als der Betrag der Differenz zwischen dem individuellen Leistungspotential und der individuellen Leistung, jeweils je Leistungsrichtung. Das Vorzeichen der individuellen Leistungsreserve ist abhängig davon, ob Leistung in positive oder negative Richtung vorgehalten werden soll. Je nachdem ob Regelleistung in positive und/oder negative Richtung vorgehalten wird, wird das Verfahren ab Verfahrensschritt 307 mit der individuellen Leistungsreserve in positive Richtung und/oder der individuellen Leistungsreserve in negative Richtung fortgesetzt. Zur besseren Veranschaulichung werden die 1000 individuellen Leistungsreserven mit R₁,..., R₁₀₀₀ bezeichnet. Die 1000 individuellen Leistungsreserven mit R₁,..., R₁₀₀₀ haben ein positives oder ein negatives Vorzeichen.

In Verfahrensschritt 307 wird für jeden Index j=1,...,1000 die angepasste individuelle Leistung Λ̃₁,.,., Λ̃₁₀₀₀ bestimmt. Die angepasste individuelle Leistung Λ̃*ⱼ* ist definiert als die Summe aus der individuellen Leistung Λ*ⱼ* und einer für Regelleistung benötigten individuellen Leistungsreserve *R̃ⱼ*.

In dem Fall, dass die Summe der 1000 individuellen Leistungen Λ₁...,Λ₁₀₀₀ gleich der vorzuhaltenden Regelleistung Λ_{Regel} ist, werden die individuellen Leistungsreserven R₁,...,R₁₀₀₀ nicht benötigt und die Werte für die für Regelleistung benötigte Leistungsreserven *R̃*₁,...,*R̃*₁₀₀₀ gleich 0 gesetzt. Die Werte für die für Regelleistung benötigten Leistungsreserven *R̃*₁,...,*R̃*₁₀₀₀ erfüllen die betragsmäßige Bedingung |*R̃ⱼ*|≤|*Rⱼ*| und können positiv oder negativ sein.

In dem Fall, dass die Summe der 1000 individuellen Leistungen Λ₁,...,Λ₁₀₀₀im Betrag größer als die vorzuhaltende Regelleistung Λ_{Regel} ist, werden die für Regelleistung benötigten individuellen Leistungsreserven *R̃*₁,...,*R̃*₁₀₀₀ so bestimmt, dass die Summe der angepassten individuellen Leistungen Λ̃₁,...,Λ̃₁₀₀₀ gleich dem Wert von der vorzuhaltenden Regelleistung Λ_{Regel} ist. Die Werte der für Regelleistung benötigten individuellen Leistungsreserven *R̃*₁,...,*R̃*₁₀₀₀ erfüllen die Bedingung |*R̃ⱼ*|≤|*Rⱼ*| und können positiv oder negativ sein.

In dem Fall, dass die Summe der 1000 individuellen Leistungen Λ₁,...,Λ₁₀₀₀ im Betrag kleiner als die vorzuhaltende Regelleistung Λ_{Regel} ist, werden die für Regelleistung benötigten individuellen Leistungsreserven *R̃*₁,...,*R̃*₁₀₀₀ so bestimmt, dass die Summe der angepassten individuellen Leistungen Λ̃₁,...,Λ̃₁₀₀₀ gleich dem Wert von der vorzuhaltenden Regelleistung Λ_{Regel} ist. Die Werte der für Regelleistung benötigten individuellen Leistungsreserven *R̃*₁,...,*R̃*₁₀₀₀ erfüllen die betragsmäßige Bedingung |*R̃ⱼ*|≤|*Rⱼ*| und können positiv oder negativ sein.

In dem Fall, dass die Summe der 1000 angepassten individuellen Leistungen Λ̃₁,...,Λ̃₁₀₀₀ nicht gleich dem Wert vorzuhaltende Regelleistung Λ_{Regel} ist, d.h. die Summe der individuellen Leistungen Λⱼ und der individuellen Leistungsreserven *R̃ⱼ* = *R̃ⱼ* zur vollständigen Erbringung der Gesamtleistung für Regelleistung je Leistungsrichtung nicht ausreicht, wird entweder Verfahrensschritt 305 erneut durchgeführt oder auf eine externe Leistung einer externen Einheit zugegriffen. Idealerweise wird das Verfahren so ausgeführt, dass der Zugriff auf eine externe Leistung einer externen Einheit möglichst nicht durchgeführt werden muss.

In Verfahrensschritt 308 werden die Werte für die angepasste individuelle Leistung Λ̃₁,...,Λ̃₁₀₀₀ und der Wert für den Zeitraum T über die dritte Datenverbindung 33 an die entsprechende der eintausend Wirtschaftseinheiten 8 übermittelt. Wie beschrieben, wird in Verfahrensschritt 107 der Zeitpunkt Tᵢ₊₁ empfangen. Da der Zeitpunkt Tᵢ bereits zeitlich früher empfangen wurde, T₀ gleich 0 ist und der Zeitraum T der Zeitraum zwischen den Zeitpunkten Tᵢ und Tᵢ₊₁, ist, ist Tᵢ₊₁ bestimmt durch die Summe Tᵢ₊T.

## Patentansprüche

1. Verfahren zum Erbringen von Regelleistung für ein elektrisches Energieversorgungsnetz (1) mit einer Mehrzahl von Energieerzeugern (4), einer Mehrzahl von Energieabnehmern (5) und einer zentralen Steuerungseinheit (6), wobei das Verfahren die folgenden Schritte umfasst:
Bereitstellen eines Gesamtenergiespeichers (7), bestehend aus einer Mehrzahl von an das elektrische Energieversorgungsnetz (1) koppelbaren Wirtschaftseinheiten (8) mit jeweils mindestens einem Energiespeicher (9) und jeweils mindestens einer dezentralen Steuerungseinheit (10);
Bestimmen für jede der Wirtschaftseinheiten (8), mit einer Frequenz, durch die mindestens eine dezentrale Steuerungseinheit (10), einer individuellen Momentanleistung und einer individuellen Maximalleistung des mindestens einen Energiespeichers (9);
Bestimmen, durch die zentrale Steuerungseinheit (6), eines individuellen Leistungspotentials jeweils für jede der Wirtschaftseinheiten (8) als die Differenz aus der individuellen Maximalleistung und der individuellen Momentanleistung;
Zuweisen, für einen Zeitraum, durch die zentrale Steuerungseinheit (6), jeweils für jede der Wirtschaftseinheiten (8) einer individuellen Leistung, wobei
jeweils der Betrag der individuellen Leistung kleiner oder gleich dem Betrag des individuellen Leistungspotentials ist, und wobei
die Summe der individuellen Leistungen und einer Leistungsreserve identisch ist mit einer ersten Gesamtleistung für Regelleistung;
Vorhalten, durch jede der Wirtschaftseinheiten (8) für den Zeitraum, der individuellen Leistung für Regelleistung.

2. Verfahren nach Anspruch 1, wobei jede der Wirtschaftseinheiten (8) für den Zeitraum jeweils die individuelle Leistung erbringen kann.

3. Verfahren nach Anspruch 1 oder 2, wobei
jede der Wirtschaftseinheiten (8) für den Zeitraum jeweils zusätzlich zu der individuellen Leistung eine individuelle Leistungsreserve für Regelleistung erbringen kann, wobei für jede der Wirtschaftseinheiten (8) jeweils die Summe der individuellen Leistung und der individuellen Leistungsreserve eine angepasste individuelle Leistung ergibt,
und/oder
in dem Fall, dass die Summe der individuellen Leistungsreserven nicht gleich der Leistungsreserve ist, eine externe Einheit eine externe Leistung erbringt, und die Summe der individuellen Leistungsreserven und der externen Leistung gleich der Leistungsreserve ist.

4. Verfahren nach einem der Ansprüche 1 - 3, wobei der Zeitraum das Reziproke der Frequenz ist.

5. Verfahren nach einem der Ansprüche 1 - 4, wobei die individuelle Leistung jeweils für jede der Wirtschaftseinheiten (8) gleich null gesetzt wird, wenn der Quotient aus der individuellen Momentanleistung und der individuellen Maximalleistung größer ist als ein erster individueller Richtwert oder kleiner ist als ein zweiter individueller Richtwert.

6. Verfahren nach einem der Ansprüche 1 - 5, wobei die erste Gesamtleistung für Regelleistung auf eine zweite Gesamtleistung für Regelleistung betragsmäßig erhöht wird, oder wobei
die erste Gesamtleistung für Regelleistung auf eine zweite Gesamtleistung für Regelleistung betragsmäßig verringert wird.

7. Verfahren nach einem der Ansprüche 1 - 6, wobei
für jede der Wirtschaftseinheiten (8) jeweils ein individueller Maximalfüllstand festgelegt werden kann, und jeweils in dem Fall, dass der individuelle Maximalfüllstand nicht festgelegt ist, die dezentrale Steuerungseinheit (10) den individuellen Maximalfüllstand bestimmt,
und/oder
für jede der Wirtschaftseinheiten (8) jeweils ein individueller Minimalfüllstand festgelegt werden kann, und jeweils in dem Fall, dass der individuelle Minimalfüllstand nicht festgelegt ist, die dezentrale Steuerungseinheit (10) den individuellen Minimalfüllstand bestimmt.

8. Verfahren nach Anspruch 7, wobei die dezentrale Steuerungseinheit (10) jeweils für jede der Wirtschaftseinheiten (8) einen individuellen Füllstand bestimmt, wobei
die erste Gesamtleistung für Regelleistung eine Leistung für Regelleistung in negative Richtung ist, und die individuelle Leistung jeweils gleich null gesetzt wird, wenn jeweils das Produkt aus einer individuellen Gesamtleistung in negative Richtung und dem Zeitraum im Betrag größer ist als die Differenz aus dem individuellen Maximalfüllstand und dem individuellen Füllstand im Betrag,
oder wobei
die erste Gesamtleistung für Regelleistung eine Leistung für Regelleistung in positive Richtung ist, und die individuelle Leistung jeweils gleich null gesetzt wird, wenn jeweils das Produkt aus einer individuellen Gesamtleistung in positive Richtung und dem Zeitraum im Betrag größer ist als die Differenz aus dem individuellen Füllstand und dem individuellen Minimalfüllstand im Betrag.

9. System zum Erbringen von Regelleistung für ein elektrisches Energieversorgungsnetz (1) mit einer Mehrzahl von Energieerzeugern (4), einer Mehrzahl von Energieabnehmern (5) und einer zentralen Steuerungseinheit, umfassend:
Mittel zum Bereitstellen eines Gesamtenergiespeichers (7), bestehend aus einer Mehrzahl von an das elektrische Energieversorgungsnetz (1) koppelbaren Wirtschaftseinheiten (8) mit jeweils mindestens einem Energiespeicher (9) und jeweils mindestens einer dezentralen Steuerungseinheit (10);
Mittel zum Bestimmen für jede der Wirtschaftseinheiten (8), mit einer Frequenz, durch die mindestens eine dezentrale Steuerungseinheit (10), einer individuellen Momentanleistung und einer individuellen Maximalleistung des mindestens einen Energiespeichers (9);
Mittel zum Bestimmen, durch die zentrale Steuerungseinheit (6), eines individuellen Leistungspotentials jeweils für jede der Wirtschaftseinheiten (8) als die Differenz aus der individuellen Maximalleistung und der individuellen Momentanleistung;
Mittel zum Zuweisen, für einen Zeitraum, durch die zentrale Steuerungseinheit (6), jeweils für jede der Wirtschaftseinheiten (8) einer individuellen Leistung, wobei
jeweils der Betrag der individuellen Leistung kleiner oder gleich dem Betrag des individuellen Leistungspotentials ist, und wobei
die Summe der individuellen Leistungen und einer Leistungsreserve identisch ist mit einer ersten Gesamtleistung für Regelleistung;
Mittel zum Vorhalten, durch jede der Wirtschaftseinheiten (8) für den Zeitraum, der individuellen Leistung für Regelleistung.

10. System nach Anspruch 9, wobei
jede der Wirtschaftseinheiten (8) für den Zeitraum jeweils die individuelle Leistung erbringen kann,
und/oder
jede der Wirtschaftseinheiten (8) für den Zeitraum jeweils zusätzlich zu der individuellen Leistung eine individuelle Leistungsreserve für Regelleistung erbringen kann, wobei für jede der Wirtschaftseinheiten (8) jeweils die Summe der individuellen Leistung und der individuellen Leistungsreserve eine angepasste individuelle Leistung ergibt,
und/oder
in dem Fall, dass die Summe der individuellen Leistungsreserven nicht gleich der Leistungsreserve ist, eine externe Einheit eine externe Leistung erbringt, und die Summe der individuellen Leistungsreserven und der externen Leistung gleich der Leistungsreserve ist.

11. System nach einem der Ansprüche 9 - 10, wobei der Zeitraum das Reziproke der Frequenz ist.

12. System nach einem der Ansprüche 9 - 11, wobei die individuelle Leistung jeweils für jede der Wirtschaftseinheiten (8) gleich null gesetzt wird, wenn der Quotient aus der individuellen Momentanleistung und der individuellen Maximalleistung größer ist als ein erster individueller Richtwert oder kleiner ist als ein zweiter individueller Richtwert.

13. System nach einem der Ansprüche 9 - 12, wobei die erste Gesamtleistung für Regelleistung auf eine zweite Gesamtleistung für Regelleistung betragsmäßig erhöht wird, oder wobei
die erste Gesamtleistung für Regelleistung auf eine zweite Gesamtleistung für Regelleistung betragsmäßig verringert wird.

14. System nach einem der Ansprüche 9 - 13, wobei
für jede der Wirtschaftseinheiten (8) jeweils ein individueller Maximalfüllstand festgelegt werden kann, und jeweils in dem Fall, dass der individuelle Maximalfüllstand nicht festgelegt ist, die dezentrale Steuerungseinheit (10) den individuellen Maximalfüllstand bestimmt,
und/oder
für jede der Wirtschaftseinheiten (8) jeweils ein individueller Minimalfüllstand festgelegt werden kann, und jeweils in dem Fall, dass der individuelle Minimalfüllstand nicht festgelegt ist, die dezentrale Steuerungseinheit (10) den individuellen Minimalfüllstand bestimmt.

15. System nach Anspruch 14, wobei die dezentrale Steuerungseinheit (10) jeweils für jede der Wirtschaftseinheiten (8) einen individuellen Füllstand bestimmt, wobei
die erste Gesamtleistung für Regelleistung eine Leistung für Regelleistung in negative Richtung ist, und die individuelle Leistung jeweils gleich null gesetzt wird, wenn jeweils das Produkt aus einer individuellen Gesamtleistung in negative Richtung und dem Zeitraum im Betrag größer ist als die Differenz aus dem individuellen Maximalfüllstand und dem individuellen Füllstand im Betrag,
oder wobei
die erste Gesamtleistung für Regelleistung eine Leistung für Regelleistung in positive Richtung ist, und die individuelle Leistung jeweils gleich null gesetzt wird, wenn jeweils das Produkt aus einer individuellen Gesamtleistung in positive Richtung und dem Zeitraum im Betrag größer ist als die Differenz aus dem individuellen Füllstand und dem individuellen Minimalfüllstand im Betrag.

## Claims

1. Method of delivering regulating power for an electric energy supply network (1) with a plurality of energy generators (4), a plurality of energy consumers (5) and a centralised control unit (6), wherein the method comprises the following steps:
providing an overall energy storage device (7), consisting of a plurality of economic units (8) couplable to the electric energy supply network (1) with in each case at least one energy storage device (9) and in each case at least one decentralised control unit (10);
determining an individual instantaneous power and an individual maximum power of the at least one energy storage device (9) for each of the economic units (8), at a frequency, through the at least one decentralised control unit (10);
determining, through the centralised control unit (6), an individual power potential in each case for each of the economic units (8) as the difference of the individual maximum power and the individual instantaneous power;
assigning an individual power for a time period, through the centralised control unit (6), in each case for each of the economic units (8), wherein
in each case the amount of the individual power is smaller than or equal to the amount of the individual power potential, and wherein
the total of the individual powers and a power reserve is identical to a first total power for regulating power;
reserving, through each of the economic units (8) for the time period, the individual power for regulating power.

2. Method according to claim 1, wherein each of the economic units (8) can deliver in each case the individual power for the time period.

3. Method according to claim 1 or 2, wherein
each of the economic units (8) can deliver an individual power reserve for regulating power for the time period in each case in addition to the individual power, wherein for each of the economic units (8) in each case the total of the individual power and the individual power reserve results in an adjusted individual power,
and/or
in the case where the total of the individual power reserves is not equal to the power reserve, an external unit delivers an external power and the total of the individual power reserves and the external power is equal to the power reserve.

4. Method according to any one of claims 1 to 3, wherein the time period is the reciprocal of the frequency.

5. Method according to any one of claims 1 to 4, wherein the individual power in each case is set equal to zero for each of the economic units (8) when the quotient of the individual instantaneous power and the individual maximum power is greater than a first individual reference value or is smaller than a second individual reference value.

6. Method according to any one of claims 1 to 5, wherein the first total power for regulating power is increased according to amount to a second total power for regulating power, or wherein
the first total power for regulating power is reduced according to amount to a second total power for regulating power.

7. Method according to any one of claims 1 to 6, wherein
for each of the economic units (8) in each case one individual maximum fill level can be specified and in each case in the case where the individual maximum fill level is not specified, the decentralised control unit (10) determines the individual maximum fill level,
and/or
for each of the economic units (8) in each case one individual minimum fill level can be specified and in each case in the case where the individual minimum fill level is not specified, the decentralised control unit (10) determines the individual minimum fill level.

8. Method according to claim 7, wherein the decentralised control unit (10) in each case determines an individual fill level for each of the economic units (8), wherein
the first total power for regulating power is a power for regulating power in the negative direction and the individual power is in each case set equal to zero when in each case the product of an individual total power in the negative direction and the time period is greater in terms of amount than the difference of the individual maximum fill level and the individual fill level in terms of amount,
or wherein
the first total power for regulating power is a power for regulating power in the positive direction and the individual power is in each case set equal to zero when in each case the product of an individual total power in the positive direction and the time period is greater in terms of amount than the difference of the individual fill level and the individual minimum fill level in terms of amount.

9. System to deliver regulating power for an electric energy supply network (1) with a plurality of energy generators (4), a plurality of energy consumers (5) and a centralised control unit, comprising:
means to provide an overall energy storage device (7), consisting of a plurality of economic units (8) couplable to the electric energy supply network (1) with in each case at least one energy storage device (9) and in each case at least one decentralised control unit (10);
means to determine an individual instantaneous power and an individual maximum power of the at least one energy storage device (9) for each of the economic units (8), at a frequency, through the at least one decentralised control unit (10);
means to determine, through the centralised control unit (6), an individual power potential in each case for each of the economic units (8) as the difference of the individual maximum power and the individual instantaneous power;
means to assign an individual power for a time period, through the centralised control unit (6), in each case for each of the economic units (8), wherein
in each case the amount of the individual power is smaller than or equal to the amount of the individual power potential, and wherein
the total of the individual powers and a power reserve is identical to a first total power for regulating power;
means to reserve, through each of the economic units (8) for the time period, the individual power for regulating power.

10. System according to claim 9, wherein
each of the economic units (8) can deliver in each case the individual power for the time period,
and/or
each of the economic units (8) can deliver an individual power reserve for regulating power for the time period in each case in addition to the individual power, wherein for each of the economic units (8) in each case the total of the individual power and the individual power reserve results in an adjusted individual power,
and/or
in the case where the total of the individual power reserves is not equal to the power reserve, an external unit delivers an external power and the total of the individual power reserves and the external power is equal to the power reserve.

11. System according to any one of claims 9 to 10, wherein the time period is the reciprocal of the frequency.

12. System according to any one of claims 9 to 11, wherein the individual power in each case is set equal to zero for each of the economic units (8) when the quotient of the individual instantaneous power and the individual maximum power is greater than a first individual reference value or is smaller than a second individual reference value.

13. System according to any one of claims 9 to 12, wherein the first total power for regulating power is increased according to amount to a second total power for regulating power, or wherein
the first total power for regulating power is reduced according to amount to a second total power for regulating power.

14. System according to any one of claims 9 to 13, wherein
for each of the economic units (8) in each case one individual maximum fill level can be specified and in each case in the case where the individual maximum fill level is not specified, the decentralised control unit (10) determines the individual maximum fill level,
and/or
for each of the economic units (8) in each case one individual minimum fill level can be specified and in each case in the case where the individual minimum fill level is not specified, the decentralised control unit (10) determines the individual minimum fill level.

15. System according to claim 14, wherein the decentralised control unit (10) in each case determines an individual fill level for each of the economic units (8), wherein
the first total power for regulating power is a power for regulating power in the negative direction and the individual power is in each case set equal to zero when in each case the product of an individual total power in the negative direction and the time period is greater in terms of amount than the difference of the individual maximum fill level and the individual fill level in terms of amount,
or wherein
the first total power for regulating power is a power for regulating power in the positive direction and the individual power is in each case set equal to zero when in each case the product of an individual total power in the positive direction and the time period is greater in terms of amount than the difference of the individual fill level and the individual minimum fill level in terms of amount.

## Revendications

1. Procédé servant à fournir une puissance de régulation pour un réseau d'alimentation en énergie (1) électrique avec une multitude de générateurs d'énergie (4), une multitude de consommateurs d'énergie (5) et une unité de commande (6) centrale, dans lequel le procédé comprend les étapes suivantes :
mise à disposition d'un accumulateur d'énergie global (7) constitué d'une multitude d'unités économiques (8) pouvant être couplées au réseau d'alimentation en énergie (1) électrique avec respectivement au moins un accumulateur d'énergie (9) et respectivement au moins une unité de commande (10) décentralisée ;
définition pour chacune des unités économiques (8), à une fréquence, par l'au moins une unité de commande (10) décentralisée, d'une puissance instantanée individuelle et d'une puissance maximale individuelle de l'au moins un accumulateur d'énergie (9) ;
définition, par l'unité de commande (6) centrale, d'un potentiel de puissance individuel respectivement pour chacune des unités économiques (8) en tant que différence entre la puissance maximale individuelle et la puissance instantanée individuelle ;
attribution, pour une durée, par l'unité de commande (6) centrale, respectivement pour chacune des unités économiques (8), d'une puissance individuelle, dans lequel
respectivement la valeur de la puissance individuelle est inférieure ou égale à la valeur du potentiel de puissance individuel, et dans lequel
la somme des puissances individuelles et d'une réserve de puissance est identique à une première puissance totale pour la puissance de régulation ;
respect, par chacune des unités économiques (8) pour la durée, de la puissance individuelle pour la puissance de régulation.

2. Procédé selon la revendication 1, dans lequel chacune des unités économiques (8) peut fournir pour la durée respectivement la puissance individuelle.

3. Procédé selon la revendication 1 ou 2, dans lequel
chacune des unités économiques (8) peut fournir pour la durée respectivement en plus de la puissance individuelle une réserve de puissance individuelle pour la puissance de régulation, dans lequel pour chacune des unités économiques (8), respectivement la somme de la puissance individuelle et de la réserve de puissance individuelle donne lieu à une puissance individuelle adaptée,
et/ou
dans le cas où la somme des réserves de puissance individuelles n'est pas égale à la réserve de puissance, une unité externe fournit une puissance externe, et la somme des réserves de puissance individuelles et de la puissance externe est égale à la réserve de puissance.

4. Procédé selon l'une quelconque des revendications 1 à 3, dans lequel la durée est la réciproque de la fréquence.

5. Procédé selon l'une quelconque des revendications 1 à 4, dans lequel la puissance individuelle est réglée respectivement pour chacune des unités économiques (8) sur zéro quand le quotient entre la puissance instantanée individuelle et la puissance maximale individuelle est supérieur à une première valeur indicative individuelle ou est inférieur à une seconde valeur indicative individuelle.

6. Procédé selon l'une quelconque des revendications 1 à 5, dans lequel la première puissance totale pour la puissance de régulation est élevée en valeur absolue à une seconde puissance totale pour la puissance de régulation, ou dans lequel
la première puissance totale pour la puissance de régulation est diminuée en valeur absolue à une seconde puissance totale pour la puissance de régulation.

7. Procédé selon l'une quelconque des revendications 1 à 6, dans lequel
pour chacune des unités économiques (8), respectivement un état de remplissage maximal individuel peut être fixé et respectivement dans le cas où l'état de remplissage maximal individuel n'est pas fixé, l'unité de commande (10) décentralisée définit l'état de remplissage maximal individuel,
et/ou
pour chacune des unités économiques (8), respectivement un état de remplissage minimal individuel peut être fixé et respectivement dans le cas où l'état de remplissage minimal individuel n'est pas fixé, l'unité de commande (10) décentralisée définit l'état de remplissage minimal individuel.

8. Procédé selon la revendication 7, dans lequel l'unité de commande (10) décentralisée définit respectivement pour chacune des unités économiques (8) un état de remplissage individuel, dans lequel
la première puissance totale pour la puissance de régulation est une puissance pour la puissance de régulation dans le sens négatif, et la puissance individuelle est respectivement égale à zéro quand respectivement le produit d'une puissance totale individuelle dans le sens négatif et de la durée en valeur est supérieur à la différence entre l'état de remplissage maximal individuel et l'état de remplissage individuel en valeur,
ou dans lequel
la première puissance totale pour la puissance de régulation est une puissance pour la puissance de régulation dans le sens positif et la puissance individuelle est respectivement égale à zéro quand respectivement le produit d'une puissance totale individuelle dans le sens positif et de la durée en valeur est supérieur à la différence entre l'état de remplissage individuel et l'état de remplissage minimal individuel en valeur.

9. Système servant à fournir de la puissance de régulation pour un réseau d'alimentation en énergie (1) électrique avec une multitude de générateurs d'énergie (4), une multitude de consommateurs d'énergie (5) et une unité de commande centrale, comprenant :
des moyens servant à mettre à disposition un accumulateur d'énergie globale (7) constitué d'une multitude d'unités économiques (8) pouvant être couplées au réseau d'alimentation en énergie (1) électrique avec respectivement au moins un accumulateur d'énergie (9) et respectivement au moins une unité de commande (10) décentralisée ;
des moyens servant à définir pour chacune des unités économiques (8), à une fréquence, par l'au moins une unité de commande (10) décentralisée, une puissance instantanée individuelle et une puissance maximale individuelle de l'au moins un accumulateur d'énergie (9) ;
des moyens servant à définir, par l'unité de commande (6) centrale, un potentiel de puissance individuel respectivement pour chacune des unités économiques (8) en tant que différence entre la puissance maximale individuelle et la puissance instantanée individuelle ;
des moyens servant à attribuer, pour une durée, par l'unité de commande (6) centrale, respectivement pour chacune des unités économiques (8), une puissance individuelle, dans lequel
respectivement la valeur de la puissance individuelle est inférieure ou égale à la valeur du potentiel de puissance individuel, et dans lequel
la somme des puissances individuelles et d'une réserve de puissance est identique à une première puissance totale pour la puissance de régulation ;
des moyens servant à respecter, par chacune des unités économiques (8) pour la durée, la puissance individuelle pour la puissance de régulation.

10. Système selon la revendication 9, dans lequel
chacune des unités économiques (8) peut fournir pour la durée respectivement la puissance individuelle,
et/ou
chacune des unités économiques (8) peut fournir pour la durée respectivement en plus de la puissance individuelle une réserve de puissance individuelle pour la puissance de régulation, dans lequel pour chacune des unités économiques (8), respectivement la somme de la puissance individuelle et de la réserve de puissance individuelle donne lieu à une puissance individuelle adaptée,
et/ou
dans le cas où la somme des réserves de puissance individuelles n'est pas égale à la réserve de puissance, une unité externe fournit une puissance externe, et la somme des réserves de puissance individuelles et de la puissance externe est égale à la réserve de puissance.

11. Système selon l'une quelconque des revendications 9 à 10, dans lequel la durée est la réciproque de la fréquence.

12. Système selon l'une quelconque des revendications 9 à 11, dans lequel la puissance individuelle est égale à zéro respectivement pour chacune des unités économiques (8) quand le quotient entre la puissance instantanée individuelle et la puissance maximale individuelle est supérieur à une première valeur indicative individuelle ou est inférieur à une seconde valeur indicative individuelle.

13. Système selon l'une quelconque des revendications 9 à 12, dans lequel la première puissance totale pour la puissance de régulation est augmentée en valeur absolue sur une seconde puissance totale pour la puissance de régulation, ou dans lequel
la première puissance totale pour la puissance de régulation est diminuée en valeur absolue à une seconde puissance totale pour la puissance de régulation.

14. Système selon l'une quelconque des revendications 9 à 13, dans lequel
pour chacune des unités économiques (8), respectivement un état de remplissage maximal individuel peut être fixé et dans le cas où l'état de remplissage maximal individuel n'est pas fixé, l'unité de commande (10) décentralisée définit l'état de remplissage maximal individuel,
et/ou
pour chacune des unités économiques (8), respectivement un état de remplissage minimal individuel peut être fixé et respectivement dans le cas où l'état de remplissage individuel minimal individuel n'est pas fixé, l'unité de commande (10) décentralisée définit l'état de remplissage minimal individuel.

15. Système selon la revendication 14, dans lequel l'unité de commande (10) décentralisée définit respectivement pour chacune des unités économiques (8) un état de remplissage individuel, dans lequel
la première puissance totale pour la puissance de régulation est une puissance pour la puissance de régulation dans le sens négatif, et la puissance individuelle est respectivement égale à zéro, quand respectivement le produit d'une puissance totale individuelle dans le sens négatif et de la durée en valeur absolue est supérieur à la différence entre l'état de remplissage maximal individuel et l'état de remplissage individuel en valeur,
ou dans lequel
la première puissance totale pour la puissance de régulation est une puissance pour la puissance de régulation dans le sens positif et la puissance individuelle est respectivement égale à zéro quand respectivement le produit d'une puissance totale individuelle dans le sens positif et de la durée en valeur est supérieur à la différence de l'état de remplissage individuel et l'état de remplissage minimal individuel en valeur.
